# EUROPEAN PATENT SPECIFICATION

(11) **EP 3 549 456 B1**
(45) Date of publication and mention of the grant of the patent: **02.09.2020**
(21) Application number: 17879356.8
(22) Date of filing: 18.07.2017
(51) Int. Cl.: A23N 12/08

(54) **HOT AIR ROASTING MACHINE**
HEISSLUFTRÖSTER
MACHINE DE TORRÉFACTION À AIR CHAUD

(30) Priority: 05.12.2016 JP 2016235711; 24.05.2017 JP 2017102208
(43) Date of publication of application: 09.10.2019
(73) Proprietor: Panasonic Intellectual Property Management Co., Ltd., Osaka-shi, Osaka 540-6207 (JP)
(72) Inventor: FUJIWARA, Youichi, Osaka 540-6207 (JP); FUJITA, Toshihiro, Osaka 540-6207 (JP); SADAKATA, Hideki, Osaka 540-6207 (JP); YAMAMOTO, Masahiro, Osaka 540-6207 (JP); SUZUKI, Kumiko, Osaka 540-6207 (JP); NAKANO, Makoto, Osaka 540-6207 (JP); SATOH, Makoto, Osaka 540-6207 (JP); MIYANO, Akifumi, Osaka 540-6207 (JP); MIYAKE, Tomoharu, Osaka 540-6207 (JP)
(74) Representative: SSM Sandmair
(86) International application number: PCT/JP2017/025866
(87) International publication number: WO 2018/105163

(56) References cited:
- EP-A1- 0 055 462
- JP-A- H0 423 976
- JP-A- S57 110 146
- JP-A- 2005 504 537
- JP-A- 2007 514 418
- US-A- 4 494 314
- US-A- 4 687 909
- US-A- 4 698 916

## Description

### TECHNICAL FIELD

The present invention relates to a hot air roasting machine configured to roast green coffee beans utilizing hot air.

### BACKGROUND ART

Roasting machines are manufactured and sold as devices for roasting green coffee beans. The roasting machines are configured to modify the degree of roasting of green coffee beans by adjusting the temperature of a roasting chamber (a roasting temperature). The roasting temperature is determined according to the kind of green coffee beans, etc. by an expert called a coffee roaster who has advanced skills in roasting.

As a roasting machine for business use, there is a roasting machine that acquires data of an ideal change of the roasting temperature from a server and presents work data according to the data of an ideal change to a user (see PTL 1, for example). By checking the work data presented on a display of the roasting machine, the user can learn a heating amount and an air blowing amount to be set. This allows the user to perform roasting by adjusting an actual roasting temperature of green beans so as to follow an ideal change of temperature.

US 4,494,314 A describes a coffee roaster which roasts coffee beans in an oven chamber employing both radiant and convection heating techniques while the beans are continually intermixed in a fluidized bed. Roaster control means are provided to terminate the roasting process by quenching the beans and oven chamber while maintaining the beans in a fluidized bed to avoid scorching or further roasting by the residual heat of the coffee bean mass.

### Citation List

### Patent Literature

PTL 1: Unexamined Japanese Patent Publication No. 2009-268428
PTL 2: US 4,494,314 A

### SUMMARY OF THE INVENTION

In order to roast coffee at an ideal roasting temperature determined by a coffee roaster, a roasting machine is required to keep a roasting chamber inside the roasting machine at a temperature suitable for roasting. It is desirable to reduce nonuniformity of a temperature distribution, since a roasting temperature in the roasting chamber is affected when nonuniformity of a temperature distribution inside the roasting machine is increased.

In addition, intense heat is generated inside the roasting machine, and thus it is desirable that the roasting machine is used according to a supposed usage and has a function to stop its operation when abnormality occurs.

A non-limiting, exemplary embodiment of the present invention provides a roasting machine in which nonuniformity of a temperature distribution is relatively small. Another non-limiting, exemplary embodiment of the present invention provides a roasting machine having a function to stop its operation when abnormality occurs.

A hot air roasting machine according to an exemplary embodiment of the present invention includes: a housing; a fan unit configured to suck air into the housing; a roasting drum that is hollow inside and includes an air inlet and a roasting chamber; a heater unit disposed between the air inlet and the roasting chamber in the roasting drum, and configured to heat the air introduced from the air inlet; and a roasting drum cover that is disposed to cover a part of an outer peripheral wall of the roasting drum and provided with a gap from the part of an outer peripheral wall of the roasting drum, the roasting drum comprises a material that has a thermal conductivity of a predetermined value or more, and an inner peripheral wall of the roasting drum cover and the part of the outer peripheral wall of the roasting drum form a gap air passage configured to guide the air that has been sucked by the fan unit into the air inlet of the roasting drum.

According to the hot air roasting machine of the exemplary embodiment of the present disclosure, the roasting drum is formed of a material that has a thermal conductivity of a predetermined value or more, and thus, becomes hot by energizing a heater. The air passing through the gap air passage is heated by heat from the outer peripheral wall of the roasting drum before reaching the air inlet of the roasting drum. This configuration can enhance heating efficiency as compared to a case in which air at a low temperature is heated only in the heater unit.

### BRIEF DESCRIPTION OF DRAWINGS

FIG. 1 is an external view of a hot air roasting machine according to an exemplary embodiment of the present invention.
FIG. 2 is a view showing an internal structure of the hot air roasting machine according to the exemplary embodiment of the present invention.
FIG. 3 is a view showing the internal structure of the hot air roasting machine according to the exemplary embodiment of the present invention in which a roasting drum cover is shown in a transparent manner.
FIG. 4 is a view showing the internal structure of the hot air roasting machine according to the exemplary embodiment of the present invention in a state in which the roasting drum cover is removed.
FIG. 5 is a view showing a flow of air inside the hot air roasting machine according to the exemplary embodiment of the present invention.
FIG. 6 is a view showing a configuration of a heater unit of the hot air roasting machine according to the exemplary embodiment of the present invention.
FIG. 7 is a view showing sizes and an arrangement of a first flow-regulating plate and a second flow-regulating plate in the heater unit of the hot air roasting machine according to the exemplary embodiment of the present invention.
FIG. 8 is a top plan view of a partition plate of the heater unit of the hot air roasting machine according to the exemplary embodiment of the present invention.
FIG. 9 is a perspective view mainly showing a wind tunnel structure of the hot air roasting machine according to the exemplary embodiment of the present invention.
FIG. 10 is a view for illustrating a function to receive water of the roasting drum cover of the hot air roasting machine according to the exemplary embodiment of the present invention.
FIG. 11 is a view showing a positional relationship between an estimated liquid level at the time when liquid is poured, a lower end of the heater unit, and a lower end of the roasting drum of the hot air roasting machine according to the exemplary embodiment of the present invention.
FIG. 12 is a view showing shapes of a cutout and the second flow-regulating plate in the heater unit of the hot air roasting machine according to the exemplary embodiment of the present invention.
FIG. 13A is a sectional view of the roasting drum and the heater unit taken at a position of a temperature sensor and the cutout of the hot air roasting machine according to the exemplary embodiment of the present invention.
FIG. 13B is a view schematically showing a flow of the poured liquid in the vicinity of the second flow-regulating plate in the heater unit of the hot air roasting machine according to the exemplary embodiment of the present invention.
FIG. 14A is a sectional view of the roasting drum and the heater unit of the hot air roasting machine according to the exemplary embodiment of the present invention in an imaginary case in which the cutout is not provided.
FIG. 14B is a view schematically showing a flow of the poured liquid in the vicinity of the second flow-regulating plate in the heater unit of the hot air roasting machine according to the exemplary embodiment of the present invention.
FIG. 15 is an enlarged transparent view showing a vicinity of an external bottom surface of a housing of the hot air roasting machine according to the exemplary embodiment of the present invention.
FIG. 16 is an enlarged bottom view of a beans loading cup of the hot air roasting machine according to the exemplary embodiment of the present invention.
FIG. 17 is a view of a lid of the hot air roasting machine according to the exemplary embodiment of the present invention.
FIG. 18 is an enlarged view of an opening structure provided on the lid of the hot air roasting machine according to the exemplary embodiment of the present invention.
FIG. 19A is a transparent view showing a state in which the beans loading cup is inserted to a first position into the hot air roasting machine according to the exemplary embodiment of the present invention.
FIG. 19B is a transparent view showing a state in which the beans loading cup is inserted to a second position into the hot air roasting machine according to the exemplary embodiment of the present invention.
FIG. 20 is a view showing a configuration of an information provision system using the hot air roasting machine according to the exemplary embodiment of the present invention.
FIG. 21 shows a hardware configuration of a database (DB) server that is operated by a green been provider and forms the information provision system using the hot air roasting machine according to the exemplary embodiment of the present invention.
FIG. 22 is a view showing an example of a roasting profile forming the information provision system using the hot air roasting machine according to the exemplary embodiment of the present invention.
FIG. 23 is a view showing an example of a roasting profile forming the information provision system using the hot air roasting machine according to the exemplary embodiment of the present invention.
FIG. 24 shows a hardware configuration of the hot air roasting machine and a user terminal device forming the information provision system using the hot air roasting machine according to the exemplary embodiment of the present invention.
FIG. 25 is a flowchart showing communication between the hot air roasting machine and the user terminal device, and processing steps of each of the hot air roasting machine and the user terminal device in the information provision system using the hot air roasting machine according to the exemplary embodiment of the present invention.
FIG. 26 is a flowchart showing processing steps from attaching the beans loading cup to performing a roasting operation in the information provision system using the hot air roasting machine according to the exemplary embodiment of the present invention.
FIG. 27 is a flowchart showing processing steps when a temperature drop is detected by the temperature sensor in the information provision system using the hot air roasting machine according to the exemplary embodiment of the present invention.

### DESCRIPTION OF EMBODIMENT

The inventors of the present application have derived a hot air roasting machine with improvements and countermeasures from a range of perspectives. For example, an improvement to enhance heat exchange efficiency, a countermeasure against a temperature rise of its housing, a countermeasure against erroneous pouring of liquid (such as water) therein, an improvement of an inlet of air, a countermeasure against hot air leakage, and enhancement of operation reliability are included. However, the following description is not divided into chapters, since one improvement or countermeasure may serve as other improvements or countermeasures.

Hereinafter, a hot air roasting machine according to an exemplary embodiment of the present invention is described with reference to the accompanying drawings. In the following exemplary embodiment, an object that is subjected to roasting (object to be roasted) is green coffee beans. The hot air roasting machine is configured to roast green beans with hot air of a high temperature. Note that a simple expression of "beans" may include any of unroasted green beans, green beans during a roasting process, and roasted coffee beans.

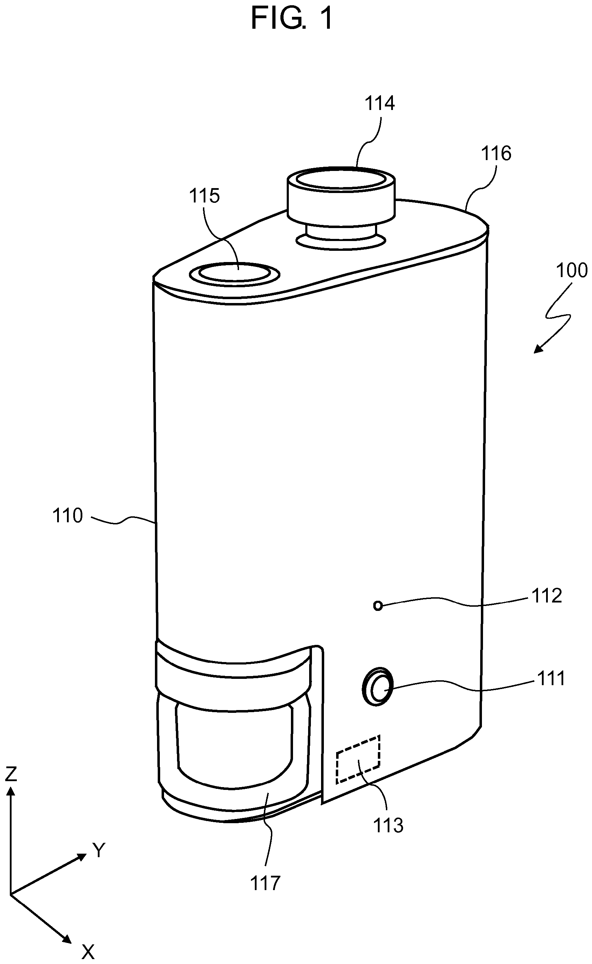

FIG. 1 is an external view of hot air roasting machine 100. In the following description, an X-axis, a Y-axis, and a Z-axis are used for explanation as shown in the figures. In particular, a negative Z-direction may be referred to as "downward" or "lower side", and a positive Z-direction may be referred to as "upward" or "upper side". In each of the figures, the same components are denoted by the same reference numerals.

Hot air roasting machine 100 includes housing 110, switch 111, status display light-emitting diode (LED) 112, electronic circuit board 113, beans loading cup 114, exhaust port 115, lid 116, and container 117. Hot air roasting machine 100 may include a switch (not shown) for turning on/off its main power source.

Housing 110 serves as an accommodation for various components inside hot air roasting machine 100, and also serves as a support for part of the components. Further, housing 110 prevents a sudden change in temperature during roasting by enclosing heat generated during roasting steps.

Switch 111 is to be pressed by a user in order to start or stop roasting or in order to discharge beans. How hot air roasting machine 100 works when switch 111 is pressed varies depending on a status of hot air roasting machine 100. For example, hot air roasting machine 100 starts a preheating operation when switch 111 is pressed in a state where beans loading cup 114 is attached after power is turned on. Hot air roasting machine 100 discharges roasted beans into container 117 when switch 111 is pressed after a roasting operation is finished.

Status display LED 112 illuminates in green, for example, during a period from power-on of hot air roasting machine 100 until hot air roasting machine 100 receives roasting profile 2, and blinks in red, for example, after the receiving of roasting profile 2. In addition, status display LED 112 illuminates in red, for example, during preheating, and blinks in orange, for example, during roasting.

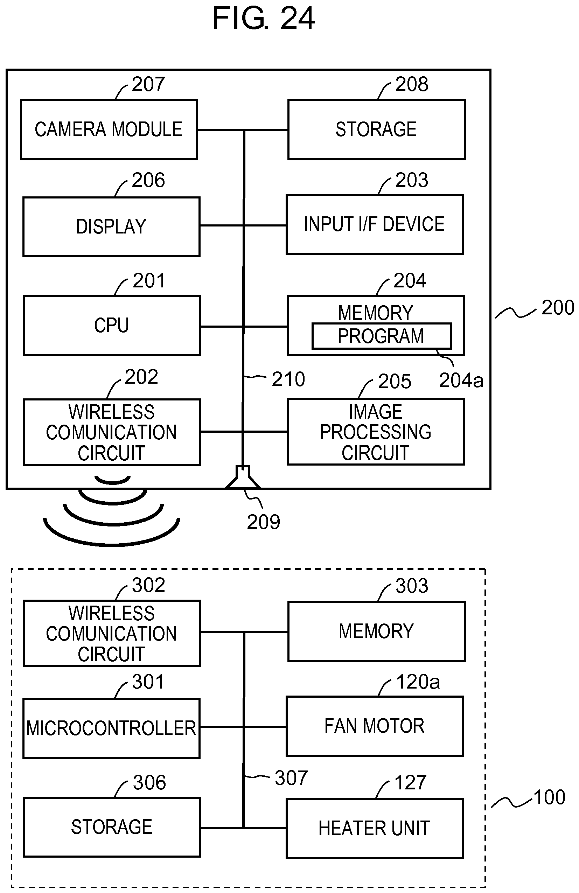

Various electronic circuits are mounted on electronic circuit board 113. For example, microcontroller 301, wireless communication circuit 302, memory 303, storage 306, communication bus 307, and the like are mounted on electronic circuit board 113, as described later with reference to FIG. 24. Note that electronic circuit board 113 is greatly simplified in FIG. 1. As described below, electronic circuit board 113 occupies a relatively wide area in the housing. Beans loading cup 114 is a container that is detachably attached to an opening of housing 110 and is capable of holding green beans less than or equal to a predetermined amount. Beans loading cup 114 has an opening on each of its upper surface and its bottom surface. The opening on the upper surface allows a user to load green beans into beans loading cup 114. The opening on the bottom surface is adapted to discharge the green beans loaded in beans loading cup 114 into a roasting pot (described below) inside hot air roasting machine 100.

Exhaust port 115 is an opening for exhausting hot air during roasting to an outside of housing 110. A noise generated inside hot air roasting machine 100 may come out through this exhaust port 115. To avoid this, a cross-shaped member (which is formed by intersecting two rectangular members) is attached to an inner wall of exhaust port 115 (i.e., short sides of the rectangular members forming the cross-shaped member are attached to the inner wall of exhaust port 115), whereby a noise is removed and an annoying sound is reduced (not shown).

Lid 116 is detachably mounted on housing 110. Lid 116 includes an opening to which beans loading cup 114 is attached, and an opening at which exhaust port 115 is provided.

Container 117 collects the discharged beans.

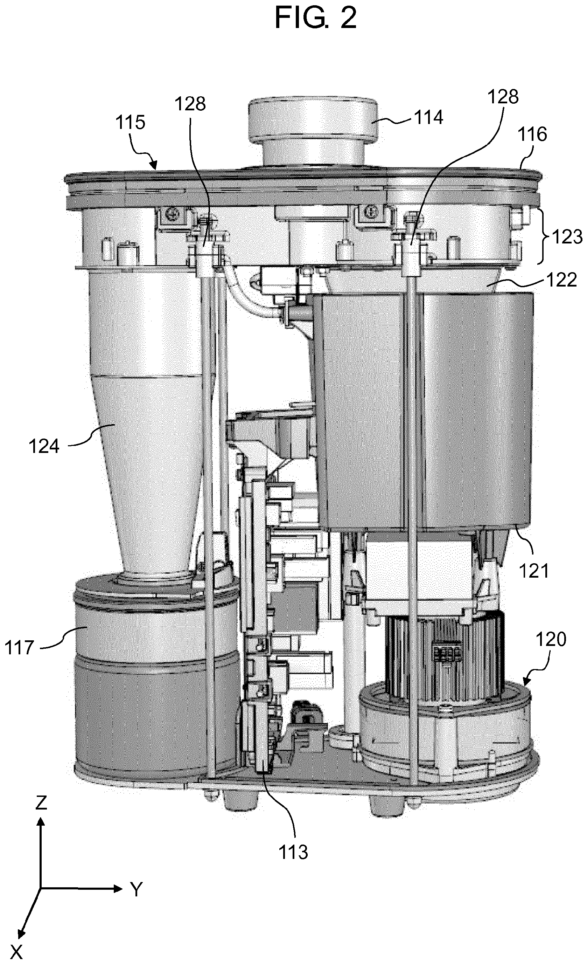

Then, an internal structure of hot air roasting machine 100 is described below with reference to FIGS. 2 to 4.

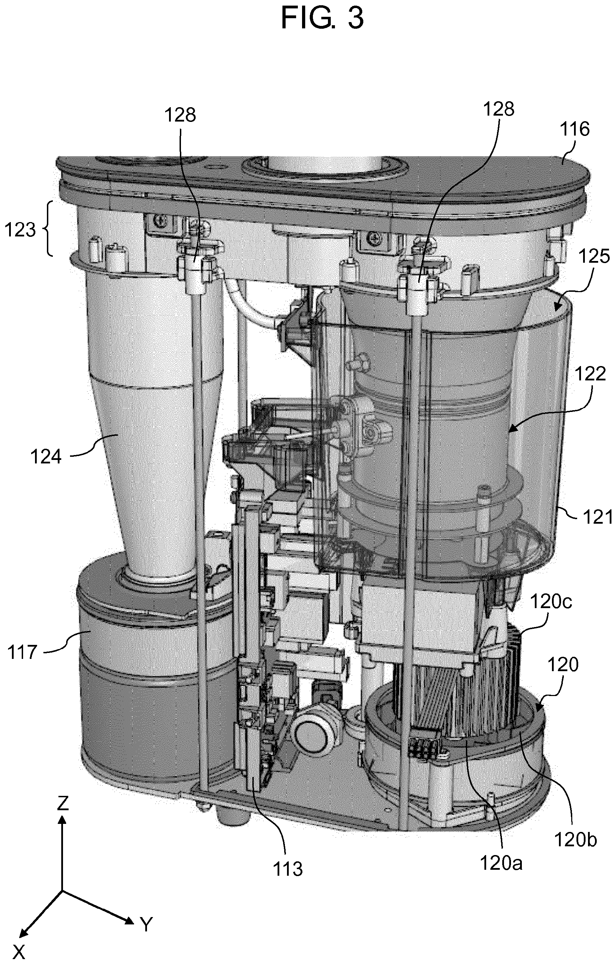

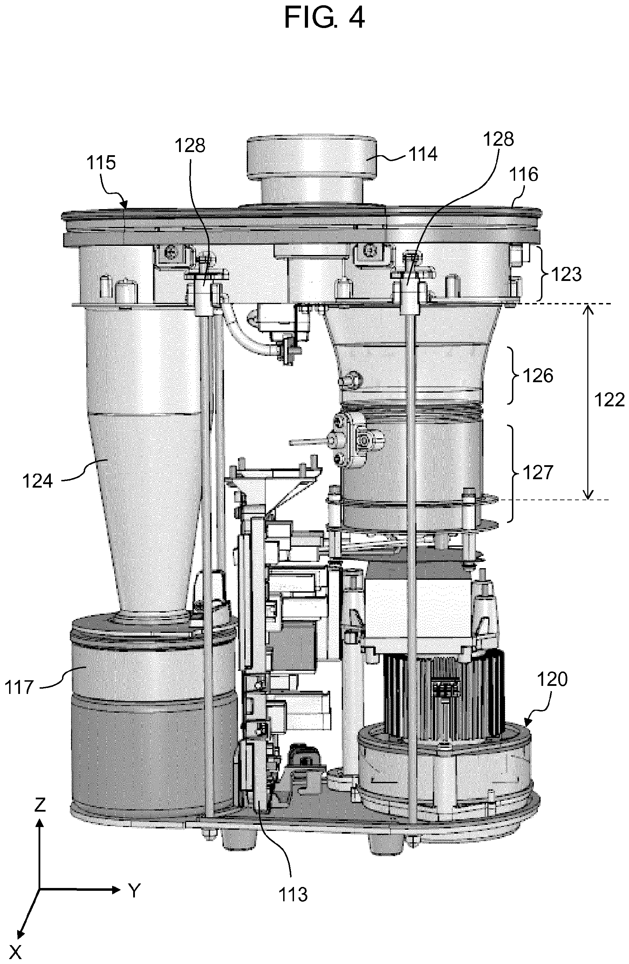

FIG. 2 shows an internal structure of hot air roasting machine 100. FIG. 3 shows an internal structure of hot air roasting machine 100 with roasting drum cover 121 being shown in a transparent manner. FIG. 4 shows an internal structure of hot air roasting machine 100 in a state in which roasting drum cover 121 is removed.

As shown in FIG. 2, hot air roasting machine 100 includes fan unit 120, roasting drum cover 121, roasting drum 122, wind tunnel structure 123, and discharge drum 124. FIG. 2 also shows an example of a size and a structure of electronic circuit board 113.

Fan unit 120 is configured to take external air into housing 110 of hot air roasting machine 100. As shown in FIG. 3, fan unit 120 includes fan motor 120a, fan 120b, and air outlet 120c. Fan 120b is mounted on fan motor 120a. Rotation of fan motor 120a rotates fan 120b, thereby taking external air into hot air roasting machine 100. The air thus taken in is heated by heater unit 127 (see FIG. 4) and used for roasting green beans. In the case where hot air roasting machine 100 is placed on a surface that is wet with liquid (such as water), fan unit 120 may erroneously take the liquid into hot air roasting machine 100. In such a case, the liquid may be sprinkled around from air outlet 120c, and splashed directly onto electronic circuit board 113. In order to avoid this, it is preferable to provide a water barrier to surround air outlet 120c (not shown).

Roasting drum cover 121 is a cover that is disposed to cover part of roasting drum 122. Roasting drum cover 121 is formed of a resin material, such as polybutylene terephthalate (PBT). As shown in FIG. 3, an inner wall of roasting drum cover 121 is not in contact with an outer peripheral wall of roasting drum 122 with a gap being provided in-between.

Roasting drum 122 has a cylindrical shape having two openings (not shown) on both ends thereof, one on the positive Z-side (upper side) and the other on the negative Z-side (lower side). In the present exemplary embodiment, roasting drum 122 is formed of a metal material, such as aluminum. However, this is one example. Roasting drum 122 may be formed of other materials.

As shown in FIG. 4, roasting chamber 126 and heater unit 127 are provided inside roasting drum 122. FIG. 4 shows positions where roasting chamber 126 and heater unit 127 are disposed. A lower end of heater unit 127 is disposed lower than a lower end of roasting drum cover 121. Thus, to be exact, heater unit 127 is not completely included inside roasting drum cover 121.

The air that has been sucked by fan unit 120 into housing 110 of hot air roasting machine 100 enters roasting drum 122 through the opening on the lower side and is exhausted through the opening on the upper side. The opening on the lower side and the opening on the upper side can be referred to as an air inlet and an air outlet, respectively. Heater unit 127 and roasting chamber 126 are provided in this order inside roasting drum 122 ranging from the air inlet to the air outlet. The flow of the air during roasting will be described later.

In the present exemplary embodiment, roasting drum cover 121 has various functions. For example, roasting drum cover 121 forms a path (air passage) for the air that has been sucked by fan unit 120 into housing 110 of hot air roasting machine 100. In the present specification, the air passage formed by the inner wall of roasting drum cover 121 and the outer peripheral wall of roasting drum 122 is referred to as "gap air passage 125". Gap air passage 125 introduces the air sucked by fan unit 120 to the air inlet of roasting drum 122.

In the case where a user pours liquid (such as water) into an inlet for putting green beans erroneously or for other reasons, roasting drum cover 121 is configured to receive and discharge the liquid. This prevents the liquid from splashing directly onto electronic circuit board 113.

The detailed configuration to achieve the above functions will be described later.

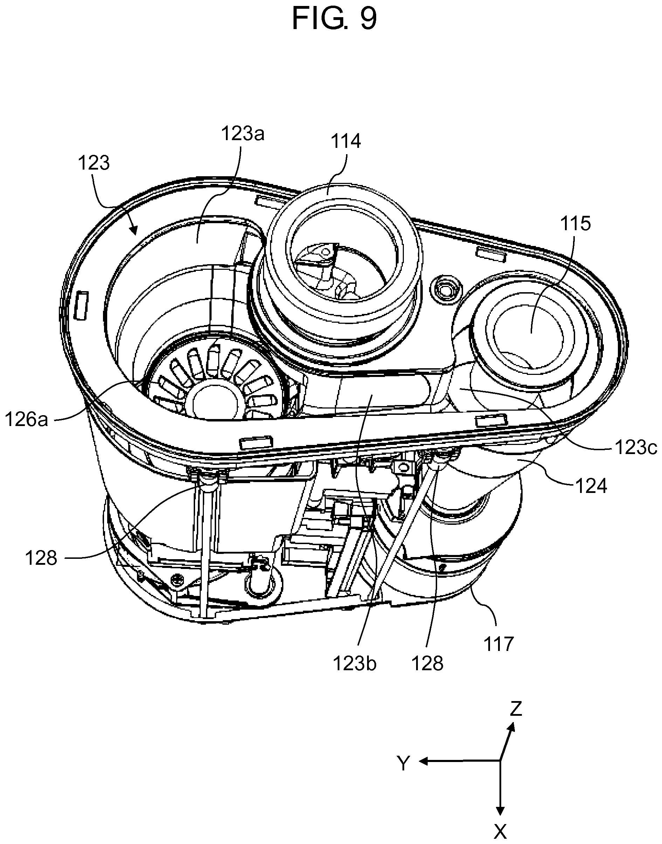

Wind tunnel structure 123 is a member that is formed of a metal material and has openings at positions corresponding to the upper opening of roasting drum 122 and an upper opening provided with discharge drum 124, respectively. Wind tunnel structure 123 also includes a groove-shaped passage that connects the two openings. The metal material is aluminum, for example. Wind tunnel structure 123 is covered with lid 116 having exhaust port 115, whereby the groove-shaped passage of wind tunnel structure 123 forms, in collaboration with lid 116, an air passage extending from roasting drum 122 to exhaust port 115. The detailed configuration of wind tunnel structure 123 will be described later with reference to FIG. 9. Note that wind tunnel structure 123 and roasting drum 122 are screwed together and each of wind tunnel structure 123 and roasting drum 122 is formed of a metal material. Accordingly, it is preferable to insert (provide) an electrically insulating sheet between wind tunnel structure 123 and roasting drum 122 such that an electric shock to a user due to electric leakage does not occur easily even in the case where the user erroneously pours liquid (such as water) in roasting drum 122.

Discharge drum 124 is a path for discharging beans contained in roasting chamber 126 to container 117. At the time of discharging beans, fan unit 120 rotates at high speed to cause a strong wind to blow into housing 110. Each of the beans is blown out from roasting chamber 126 by the strong wind and reaches a position corresponding to the upper opening of discharge drum 124 through the air passage of wind tunnel structure 123. Then, the beans fall from the upper opening by gravitation through discharge drum 124, and are discharged into container 117.

Hot air roasting machine 100 includes a plurality of spacers 128. Spacers 128 are provided between wind tunnel structure 123 and housing 110 to support housing 110. Spacers 128 are formed of, for example, phenolic resin (Bakelite) or Polyphenylene sulfide (PPS) resin.

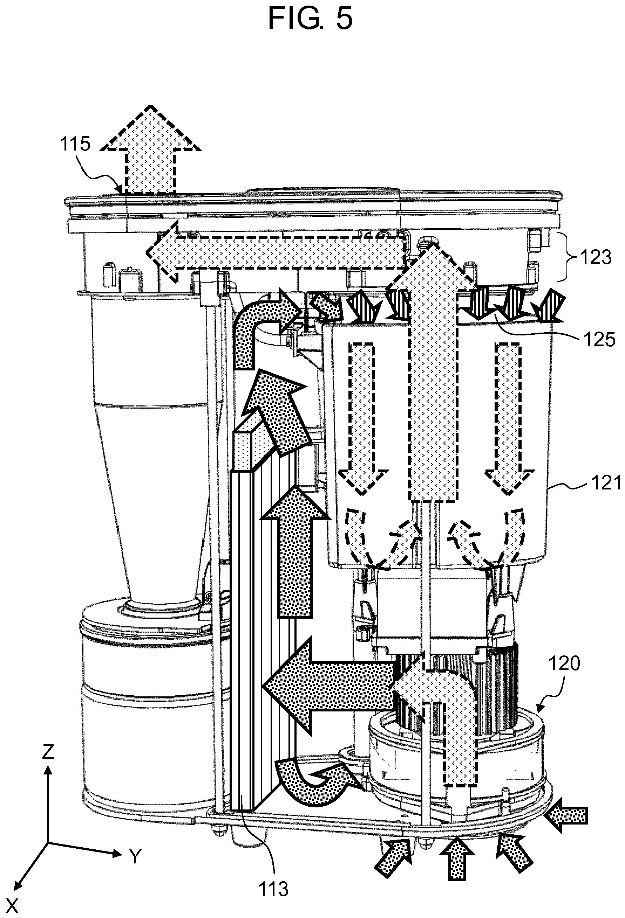

Then, a flow of air inside hot air roasting machine 100 is described with reference to FIG. 5.

FIG. 5 shows the flow of air inside hot air roasting machine 100 by using the arrows. The flow of air passing through fan unit 120, roasting drum cover 121, roasting drum 122, and wind tunnel structure 123 is indicated by the dashed arrows.

Firstly, fan motor 120a of fan unit 120 rotates to suck air from the lower side (the negative Z-side) of housing 110. Most of the air sucked into hot air roasting machine 100 is blown to electronic circuit board 113.

The inventors of the present application have intentionally designed electronic circuit board 113 to be disposed along an air passage between fan unit 120 and wind tunnel structure 123. The reason is that this arrangement can effectively cool electronic circuit board 113. Various electronic components mounted on electronic circuit board 113 generate heat during operation of hot air roasting machine 100. The air sucked by fan unit 120 at an outside-air temperature (at a low temperature) is blown against electronic circuit board 113 and absorbs heat from the electronic components and electronic circuit board 113. This can cool electronic circuit board 113.

The heat from electronic circuit board 113 advantageously causes a rise in air temperature. The rise in air temperature eliminates the need for depending only on heater unit 127 as a heat source. Even a slight increase in air temperature enables heater unit 127 to perform heat application effectively.

Then, the air goes upward and hits the outer surface (outer peripheral wall) of wind tunnel structure 123, and changes the course into the positive Y-direction. When heater unit 127 continues to generate heat during a roasting step, the heated air passes through wind tunnel structure 123 and is exhausted from exhaust port 115. Since wind tunnel structure 123 is formed of a metal material as described above, the heat of the air passing through wind tunnel structure 123 raises the temperature of the outer peripheral wall of wind tunnel structure 123 by heat transfer. As a result, the air is further heated by hitting wind tunnel structure 123 and absorbing heat also from wind tunnel structure 123. This configuration greatly enhances the heating efficiency. Simultaneously, wind tunnel structure 123 is cooled and a temperature rise thereof can be suppressed.

Then, the air enters gap air passage 125, and goes down between roasting drum cover 121 and roasting drum 122 to reach the air inlet of roasting drum 122. The air is also heated while passing through gap air passage 125. This is because the roasting step once started causes a temperature rise of the outer peripheral wall of roasting drum 122 in the same manner as the temperature rise of the outer peripheral wall of wind tunnel structure 123 as described above. Accordingly, the air has been heated considerably when reaching the air inlet of roasting drum 122 after passing through gap air passage 125. The configuration according to the present exemplary embodiment enables highly efficient heat exchange.

The air enters roasting drum 122 through the air inlet of roasting drum 122, and is heated by heater unit 127 to make a hot wind. The hot wind stirs green beans inside roasting chamber 126 by the wind power. As a result, the green beans in roasting chamber 126 are roasted evenly. The hot wind enters wind tunnel structure 123 through the upper opening of roasting drum 122 (air outlet), passes through the air passage of wind tunnel structure 123, and is exhausted from exhaust port 115.

Note that the air passing through gap air passage 125 can absorb heat from the outer peripheral wall of roasting drum 122 as long as roasting drum cover 121 partly covers the outer peripheral wall of roasting drum 122. Thus, it is sufficient that roasting drum cover 121 covers, for example, a part of the outer peripheral wall of roasting drum 122 corresponding to a position (range) where heater unit 127 is provided. However, the inventors of the present application have designed roasting drum cover 121 to cover a part of the outer peripheral wall of roasting drum 122 at a position (range) corresponding to not only heater unit 127 but also roasting chamber 126. This allows the air to be heated more effectively in gap air passage 125.

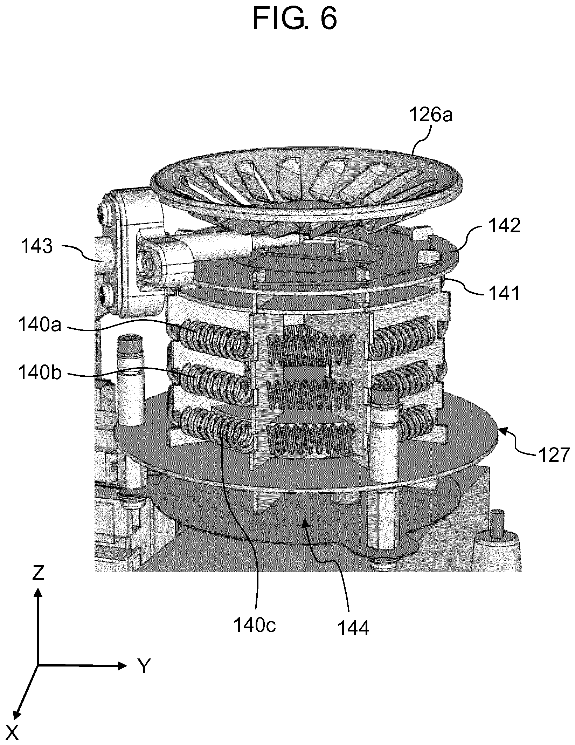

Then, heater unit 127 and the configuration in the vicinity of heater unit 127 are described below with reference to FIGS. 6 to 8.

FIG. 6 shows a configuration of heater unit 127. As shown in FIG. 4, heater unit 127 is disposed inside roasting drum 122.

Heater unit 127 includes a plurality of heating wires 140a to 140c, first flow-regulating plate 141, second flow-regulating plate 142, and temperature sensor 143. FIG. 6 shows partition plate 126a, however, partition plate 126a is not a component of heater unit 127.

Heating wires 140a to 140c each convert electric power to heat. Heating wires 140a to 140c are arrayed near an inner peripheral wall of roasting drum 122 in the Z-direction along the inner peripheral wall. As heating wires 140a to 140c are arranged along the inner peripheral wall of roasting drum 122, a greater length can be ensured regarding each of the heating wires. This configuration increases a resistance value of each of the heating wires, thereby increasing the amount of heat generation effectively. In the present exemplary embodiment, three heating wires are used, but any number of heating wires can be provided. At least one heating wire is sufficient.

First flow-regulating plate 141 and second flow-regulating plate 142 are provided for the purpose of controlling a flow of air. The air is introduced from opening 144, which is provided at a lower part of the drawing plane, and is heated by heating wires 140a to 140c. Then, the heated air passes through an air passage formed by first flow-regulating plate 141 and second flow-regulating plate 142, and enters roasting chamber 126 through slits provided in partition plate 126a. The air passage formed by first flow-regulating plate 141 and second flow-regulating plate 142 will be described in detail later.

Temperature sensor 143 is configured to detect a temperature of the air heated by heater unit 127. Temperature sensor 143 is, for example, a platinum temperature sensor having heat resistance up to about 450 °C.

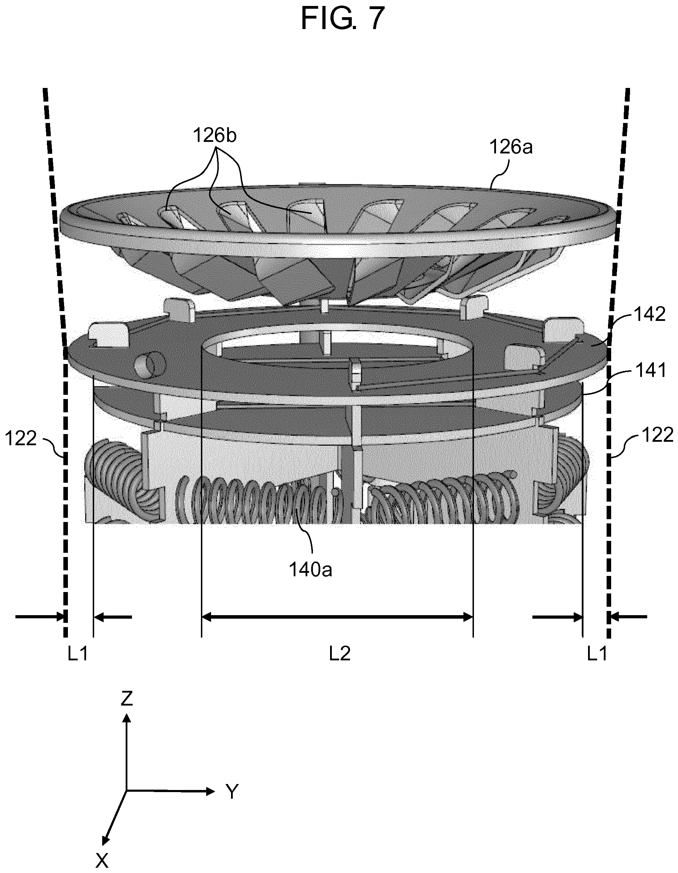

FIG. 7 shows sizes and an arrangement of first flow-regulating plate 141 and second flow-regulating plate 142. Dashed lines 122 in FIG. 7 indicate a position of the inner peripheral wall of roasting drum 122. Note that temperature sensor 143 is omitted in FIG. 7 for simplicity.

First flow-regulating plate 141 is a plate having a substantially disc shape. On the other hand, second flow-regulating plate 142 is a plate having an annular shape with an opening at the center thereof. First flow-regulating plate 141 and second flow-regulating plate 142 are exposed to a hot wind having a temperature of about 200 °C, thus being formed from mica, for example.

Firstly, first flow-regulating plate 141 is described below. As shown in FIG. 7, predetermined gap L1 is provided between an outer periphery of first flow-regulating plate 141 and the inner peripheral wall of roasting drum 122. The air from the air inlet moves along the inner peripheral wall of roasting drum 122 due to existence of first flow-regulating plate 141. As a result, the air is in contact with heating wires 140a to 140c arranged along the inner peripheral wall for a long period of time, thus being heated efficiently.

In the present exemplary embodiment, gap L1 is provided between the outer periphery of first flow-regulating plate 141 and the vicinity of the inner peripheral wall of roasting drum 122, and heating wires 140a to 140c are arranged in the vicinity of the inner peripheral wall. This configuration is one example. A gap for passing air may be provided at a position other than the outer periphery of first flow-regulating plate 141, and heating wire 140 may be provided near the gap, although this configuration shortens heating wires 140a to 140c.

Then, second flow-regulating plate 142 is described. Second flow-regulating plate 142 has an annular-shaped outer periphery that is in contact with the inner peripheral wall of roasting drum 122. The heated air that has passed through gap L1 cannot move upward along the inner peripheral wall of roasting drum 122, and thus moves toward opening L2 at a center of second flow-regulating plate 142 and moves upward through opening L2. The hot wind is temporarily gathered at opening L2, and then blows in roasting chamber 126 through slits 126b of partition plate 126a.

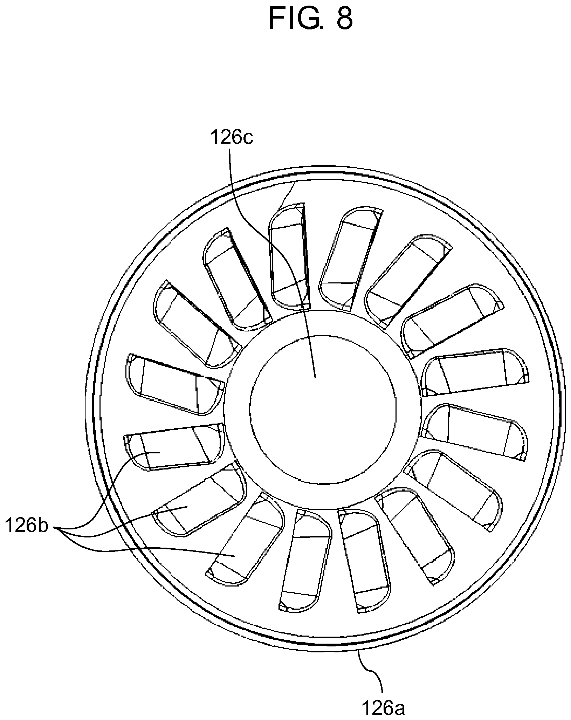

FIG. 8 is a top plan view of partition plate 126a. As shown in FIG. 8, center portion 126c of partition plate 126a is not open so that air cannot pass through. On the other hand, partition plate 126a includes a plurality of slits 126b extending radially outwardly from center portion 126c. By using partition plate 126a like this, the heated air that has reached near opening L2 of second flow-regulating plate 142 flows uniformly and radially outward from center portion 126c of partition plate 126a. Then, the air flows into roasting chamber 126 equally through each of slits 126b. This configuration achieves uniform temperature of the heated air blown into roasting chamber 126. This configuration also suppresses nonuniformity of heat inside roasting chamber 126, thereby achieving an environment suitable for roasting.

FIG. 9 is a perspective view mainly showing wind tunnel structure 123. In FIG. 9, lid 116 is removed from hot air roasting machine 100.

Wind tunnel structure 123 includes first chamber 123a, air passage 123b, and second chamber 123c. First chamber 123a is a space integrated with roasting chamber 126. FIG. 9 shows partition plate 126a that is a bottom of roasting chamber 126. Air passage 123b connects roasting chamber 126 with exhaust port 115, and introduces the heated air and/or beans from roasting drum 122 to second chamber 123c. Second chamber 123c is a space connected to both of exhaust port 115 and discharge drum 124.

The hot wind that has passed through air passage 123b is exhausted from second chamber 123c to the outside of housing 110 through exhaust port 115. On the other hand, the beans that has passed through air passage 123b fall from second chamber 123c to discharge drum 124 and are received by container 117.

As described above, once roasting is started, passage 123b is heated because the hot wind of about 200 °C passes through passage 123b of wind tunnel structure 123. As wind tunnel structure 123 is formed of a metal material, the heat is transferred to the outer peripheral wall of wind tunnel structure 123. As a result, the air moving from electronic circuit board 113 toward gap air passage 125 is heated as described above with reference to FIG. 5.

As shown in FIGS. 2 to 4, and FIG. 9, spacers 128 are respectively provided at four places on a periphery of wind tunnel structure 123. Spacers 128 are required to have heat resistance properties, since the outer peripheral wall of wind tunnel structure 123 reaches an extremely high temperature.

The inventors of the present application have employed spacers 128 having heat insulation properties, in addition to heat resistance properties. This prevents the heat of the outer peripheral wall of wind tunnel structure 123 from being transferred to housing 110. If the heat is transferred to housing 110, a user can hardly touch housing 110. In addition, the temperature of the outer peripheral wall of wind tunnel structure 123 drops when the heat is escaped to housing 110. This causes insufficient heating of the air before blowing in gap air passage 125, which decreases the efficiency of heat recovery. Spacers 128 having heat insulation properties achieve thermal insulation between housing 110 and wind tunnel structure 123. With this configuration, heat can be kept inside the housing, so that the air flowing through the air passage can be heated effectively, which enhances efficiency of heat recovery.

Phenolic resin (Bakelite) or Polyphenylene sulfide (PPS) resin is cited as an example of a material of spacers 128. However, spacers 128 may be formed of a material other than the cited materials, as long as the material can exhibit a predetermined degree of heat resistance and heat insulation properties.

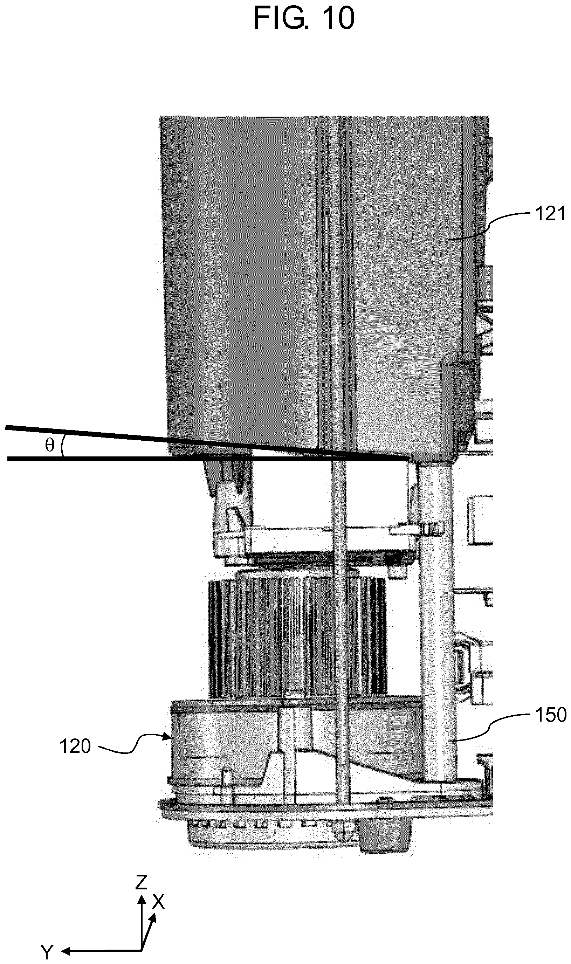

FIG. 10 is a view for illustrating a function to receive water of roasting drum cover 121.

Roasting machine 100 has an opening at an upper part thereof for putting green beans. Thus, there is a possibility that liquid, such as water, is erroneously poured in this opening. It is undesirable that liquid is introduced in housing 110 and splashed onto electronic circuit board 113 or the like during hot air roasting machine 100 is energized.

In view of this, the inventors of the present application have employed roasting drum cover 121 so as to prevent liquid from being splashed onto the electronic circuit and the like in housing 110. In the case where a user erroneously pours liquid into the opening of housing 110, the liquid is received by roasting drum cover 121.

As shown in FIG. 10, drainpipe 150 is connected to roasting drum cover 121 at one corner of roasting drum cover 121. An inside bottom surface of roasting drum cover 121 is inclined at angle θ such that the liquid in roasting drum cover 121 is gathered at a joint portion with drainpipe 150. Angle θ is 2 to 5 degrees, for example. The liquid in roasting drum cover 121 is gathered at the joint portion with drainpipe 150 due to the inclination of angle θ, and discharged through drainpipe 150 to the outside of housing 110. Drainpipe 150 is disposed along a wall surface inside housing 110. Electronic circuit board 113 is disposed at a central part inside housing 110, and components of the electronic circuit are closely disposed on electronic circuit board 113. Drainpipe 150 is disposed along the wall surface inside housing 110 to keep a distance as long as possible from electronic circuit board 113 and the electronic components thereon that should avoid liquid.

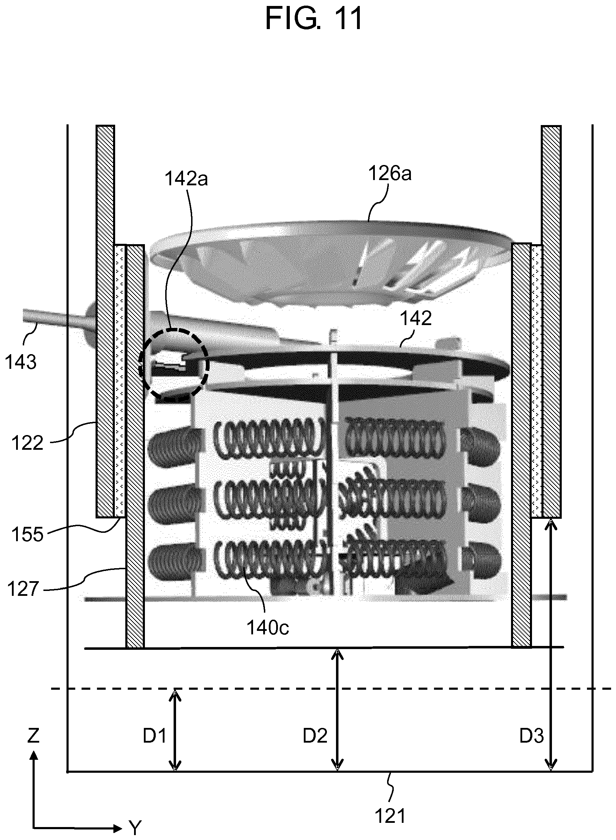

FIG. 11 shows a positional relationship between estimated liquid level D1 at the time when liquid is poured, lower end D2 of heater unit 127, and lower end D3 of roasting drum 122. The inventors of the present application have estimated that a liquid level reaches position D1 when 200 ml of liquid at the maximum is poured in. Heater unit 127 is disposed at a predetermined distance away from the inside bottom surface of roasting drum cover 121. Specifically, lower end D2 of heater unit 127 is disposed higher than estimated liquid level D1. With this configuration, heating wire 140c disposed at a lowermost part of heater unit 127 is prevented from being soaked in liquid continuously within a range of the estimated amount of liquid.

Lower end D3 of roasting drum 122 is positioned above lower end D2 of heater unit 127. At least one insulating sheet 155 is provided between roasting drum 122 and heater unit 127. Insulating sheet 155 may be disposed at any position between an outer periphery of heater unit 127 and an inner periphery of roasting drum 122. A plurality of insulating sheets 155 may be provided instead of one insulating sheet 155.

Providing at least one insulating sheet 155 prevents electricity from being transmitted widely to an upper area inside housing 110 through roasting drum 122 formed of a metal material unless the liquid level reaches position D3 even in the case where heater unit 127 is soaked in liquid.

Note that temperature sensor 143 is inserted into roasting drum 122 through a hole (inserting slot) that penetrates a wall surface of heater unit 127 and a wall surface of roasting drum 122.

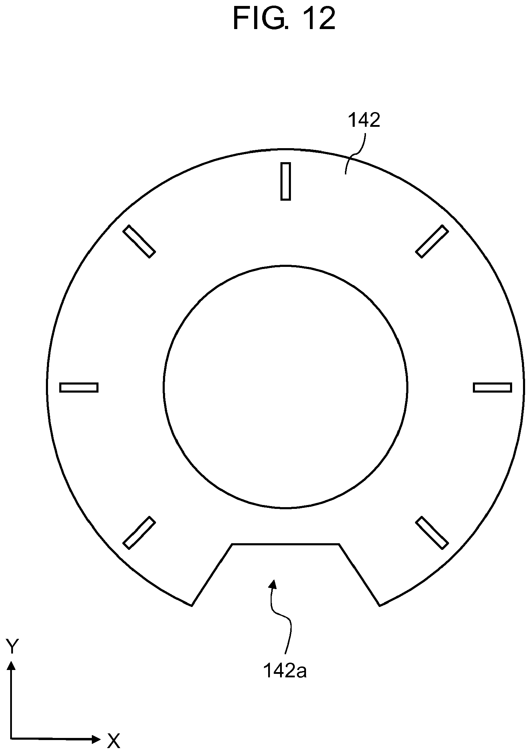

As shown in FIG. 11, second flow-regulating plate 142 includes cutout 142a in the present exemplary embodiment. FIG. 12 shows shapes of second flow-regulating plate 142 and cutout 142a. Note that the shapes of second flow-regulating plate 142 and cutout 142a shown in the figure are an example.

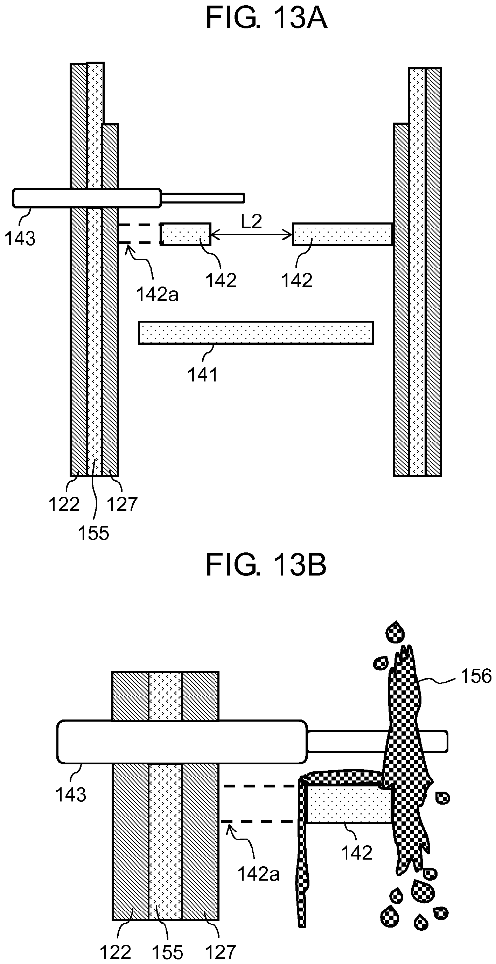

Cutout 142a is provided at a position corresponding to a position of temperature sensor 143 inserted from the inserting slot. Cutout 142a is provided to reliably avoid conduction between roasting drum 122 and heater unit 127 in the case where liquid is erroneously poured. The specific configuration is described below with reference to FIGS. 13A and 13B.

FIG. 13A is a sectional view of roasting drum 122 and heater unit 127 taken at a position of temperature sensor 143 and cutout 142a. Cutout 142a of second flow-regulating plate 142 is disposed below temperature sensor 143. Second flow-regulating plate 142 has an annular shape, and includes opening L2 at a center thereof.

FIG. 13B schematically shows a flow of poured liquid 156 in the vicinity of second flow-regulating plate 142. Providing cutout 142a allows cutout 142a to flow downward without reaching an inside surface of heater unit 127. Liquid 156 does not reach the inserting slot for temperature sensor 143 provided in heater unit 127 neither.

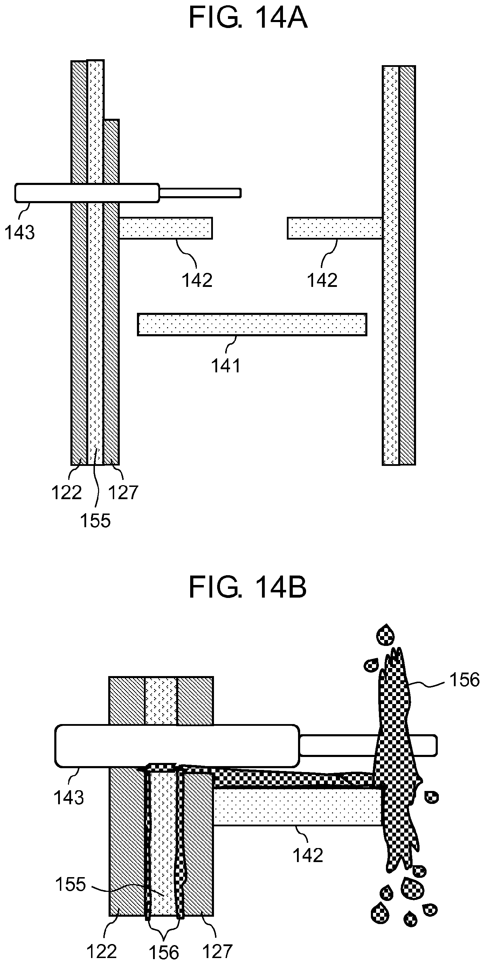

On the other hand, in the case where cutout 142a is not provided, liquid 156 flows downward taking a different course from that of FIG. 14B.

FIG. 14A is a sectional view of roasting drum 122 and heater unit 127 in an imaginary case in which cutout 142a is not provided. Since cutout 142a is not provided, second flow-regulating plate 142 is in contact with the inside surface of heater unit 127.

FIG. 14B schematically shows a flow of poured liquid 156 in the vicinity of second flow-regulating plate 142. Since second flow-regulating plate 142 and the inside surface of heater unit 127 are in contact with each other, liquid 156 reaches heater unit 127. Further, part of liquid 156 flows out to an external surface of heater unit 127 from the inserting slot for temperature sensor 143.

Flowing-out liquid 156 flows downward between heater unit 127 and insulating sheet 155. Further part of liquid 156 flows out from the inserting slot provided in insulating sheet 155 toward roasting drum 122, and flows downward between insulating sheet 155 and roasting drum 122. In such a case, the liquid may serve as a conductor and allow conduction between roasting drum 122 and heater unit 127.

As is clear from a comparison between FIG. 13B and FIG. 14B, conduction between roasting drum 122 and heater unit 127 can be more reliably avoided by providing second flow-regulating plate 142 with cutout 142a.

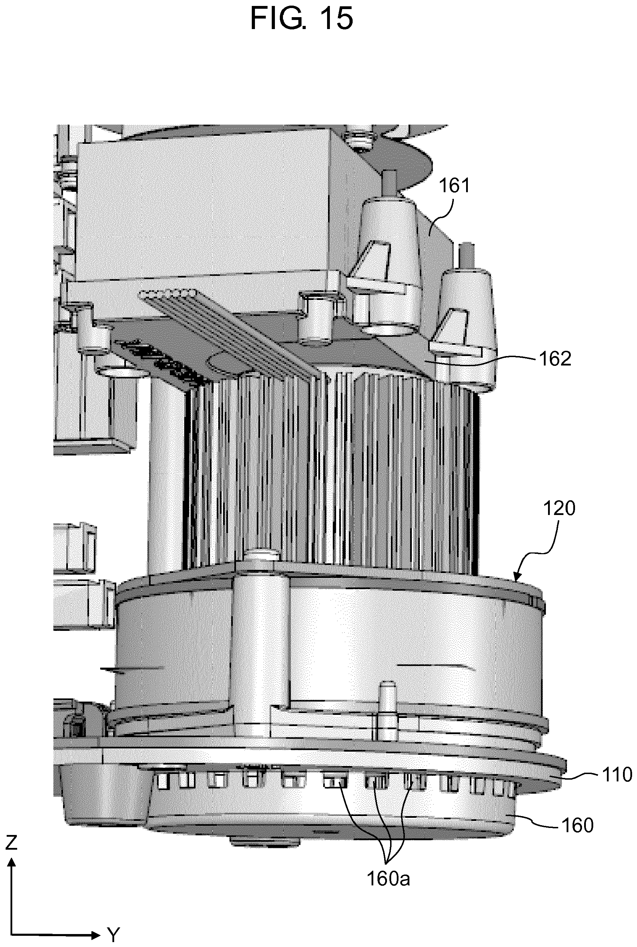

Then, a countermeasure against entry of liquid from a lower part of housing 110 is described with reference to FIG. 15.

FIG. 15 is an enlarged transparent view showing a vicinity of an external bottom surface of housing 110. The external bottom surface of housing 110 includes protruding cover 160 protruding outward from the housing. In the present exemplary embodiment, protruding cover 160 has a columnar shape of which axis is parallel to the Z-axis.

Protruding cover 160 includes a plurality of slits 160a for taking in air. Slits 160a are provided on a side surface of columnar-shaped protruding cover 160. Slits 160a according to the present exemplary embodiment are disposed at an upper part of the side surface of protruding cover 160.

In the present exemplary embodiment, an axis of rotation of fan motor 120a of fan unit 120 is parallel to the Z-axis. Accordingly, air is taken into fan motor 120a in a direction parallel to columnar-shaped protruding cover 160. However, the air is taken into housing 110 in a direction parallel to the bottom surface of housing 110 when passing through slits 160a.

Slits 160a are provided on the side surface of protruding cover 160 so as to avoid entry of liquid during operation of hot air roasting machine 100. Let us suppose that slits 160a are provided on the bottom surface of housing 110 to take in air in the Z-direction. The taken-in air flows as it is in the Z-direction into fan motor 120a. Such a configuration causes fan motor 120a to suck not only air but also liquid in the case where liquid, such as water, exists on a surface on which hot air roasting machine 100 is placed, or in the case where liquid flows on the surface toward hot air roasting machine 100 during operation of hot air roasting machine 100. Since hot air roasting machine 100 operates electrically, it is undesirable that liquid is splashed into housing 110. Since slits 160a are provided on the upper part of the side surface of protruding cover 160, liquid is less likely to be taken in as compared to the case where slits 160a are provided at a lower part of the side surface.

It is possible to take in air into housing 110 from a direction parallel to the external bottom surface of housing 110 by providing slits 160a on the upper part of the side surface of protruding cover 160 as in the present exemplary embodiment. This configuration prevents liquid from entering housing 110 even if liquid exists on a place where hot air roasting machine 100 is set. Each of slits 160a may be a hole with mesh. This prevents entry of a relatively large foreign substance. In addition, changing and optimizing a length of a leg attached to housing 110, which is shown at the lower left of FIG. 15, can prevent liquid from entering a main body of hot air roasting machine 100 even in the case where liquid (such as water) exists on a surface on which hot air roasting machine 100 is placed, and also contributes to stabilization of hot air roasting machine 100.

The inventors of the present application have taken a countermeasure against a case in which liquid is taken in. Splashing of liquid is basically undesirable for any kinds of electronic circuit boards. However, protecting relatively high-voltage electronic circuit boards from splashing of liquid should be considered as a matter of priority. According to the configuration of the present exemplary embodiment, heater unit 127 is disposed above fan unit 120. Heater unit 127 is applied with a relatively high voltage and large current. Thus, the inventors of the present application have taken a countermeasure against a case in which taken-in liquid is splashed above heater unit 127.

There is provided near heater unit 127 an electronic circuit board on which a drive circuit configured to drive heater unit 127 and/or a power circuit and the like configured to supply power to the drive circuit are mounted. The inventors of the present application have provided case 161 including the electronic circuit board between fan unit 120 and roasting drum cover 121, and also provided plate-like body 162 formed of a waterproof material between case 161 and fan unit 120. With this configuration, splashing of liquid onto the electronic circuit board is prevented even if liquid is sucked by fan unit 120.

Case 161 is formed of a PBT resin, for example. Plate-like body 162 may also be formed of a PBT resin, for example. Note that plate-like body 162 is not necessarily formed of a waterproof material. Waterproof properties of plate-like body 162 may be achieved by applying a waterproof coating or attaching a waterproof sheet on a surface of a non-water proof material.

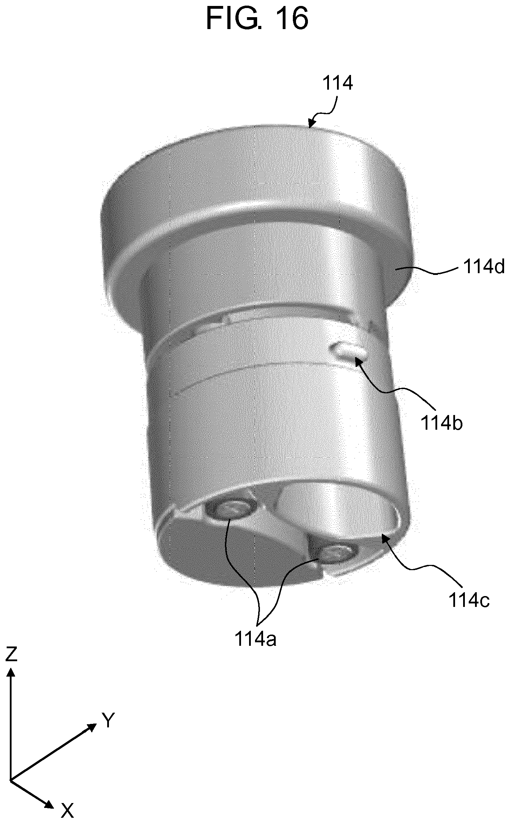

Then, a configuration of beans loading cup 114 and movements of beans loading cup 114 at the time of attaching beans loading cup 114 to housing 110 are described with reference to FIGS. 16 to 19B.

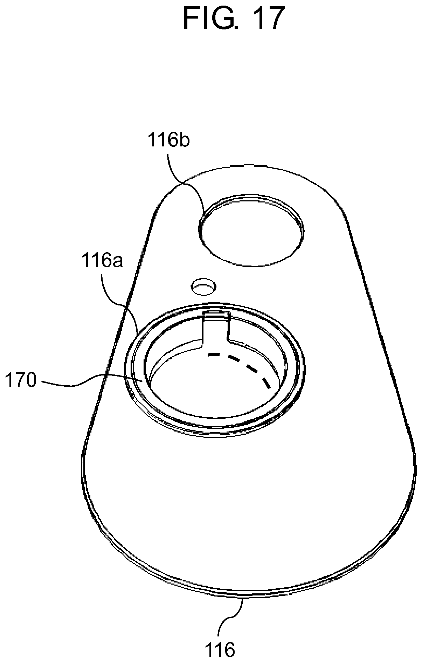

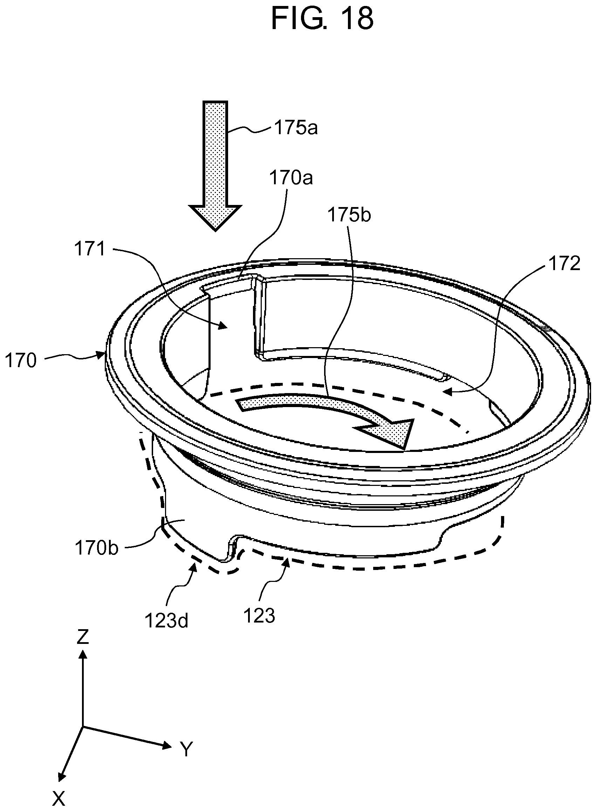

FIG. 16 is an enlarged bottom view of beans loading cup 114. FIG. 17 shows opening structure 170 integrated with lid 116. Lid 116 includes opening 116a corresponding to opening structure 170. Opening structure 170 is fitted in opening 116a. Lid 116 also includes opening 116b corresponding to exhaust port 115. FIG. 18 is an enlarged view of opening structure 170.

First, the following description refers to FIG. 16.

Beans loading cup 114 has a substantially columnar shape. Beans loading cup 114 includes two magnets 114a, protrusion 114b, opening 114c, and grip 114d.

Two magnets 114a generate a predetermined strength of magnetic force. Hot air roasting machine 100 includes a magnetic sensor (described later), and the magnetic sensor detects that beans loading cup 114 is attached to hot air roasting machine 100 by measuring the strength of the magnetic field.

Protrusion 114b is to be engaged with cut groove 170 included in opening structure 170 described later.

Opening 114c is configured to discharge green beans, which have been loaded through an opening provided at an upper surface of beans loading cup 114, into roasting chamber 126. The green beans loaded into beans loading cup 114 are discharged into roasting chamber 126 when opening 114c faces an opening of hot air roasting machine 100.

Grip 114d is provided to be held by a user so as to move beans loading cup 114. Grip 114d is disposed at one end in the positive Z-direction of beans loading cup 114, and has a radius greater than the other end in the negative Z-direction. Grip 114d is formed of a non-slippery material, such as foamed silicone rubber. Grip 114d preferably has a flanged shape (not shown) at its lowermost part so as not to slip out from the user's hand when held by the user, since roasting beans causes a temperature rise of lid 116, as described later.

Next, the following description refers to FIG. 18.

Opening structure 170 has an annular shape, and has a predetermined width in the radial direction at an opening thereof.

In the present exemplary embodiment, opening structure 170 is fitted in lid 116. Lid 116 needs to completely cover an upper part of wind tunnel structure 123 when attached to hot air roasting machine 100 so that air passage 123b is tightly formed.

In view of this, opening structure 170 is provided with a projection and wind tunnel structure 123 is provided with a depression in the present exemplary embodiment such that opening structure 170 and wind tunnel structure 123 are reliably engaged with each other in a predetermined positional relationship.

As shown in FIG. 18, opening structure 170 has projection 170b projecting in the negative Z-direction. On the other hand, wind tunnel structure 123 has depression 123d. In FIG. 18, an outer periphery of wind tunnel structure 123 with which opening structure 170 comes into contact is shown by a broken line.

When projection 170b of opening structure 170 and depression 123d of wind tunnel structure 123 are engaged with each other, opening structure 170 is positioned appropriately with respect to wind tunnel structure 123, i.e., disposed at a position intended by a designer. When opening structure 170 and wind tunnel structure 123 have an appropriate positional relationship, lid 116 to which opening structure 170 is attached is designed to completely cover the upper part of wind tunnel structure 123, and is also designed not to create a gap between wind tunnel structure 123 and lid 116. Lid 116 forms part of air passage 123b of wind tunnel structure 123.

This configuration allows a user to attach lid 116 to hot air roasting machine 100 without creating a gap by engaging projection 170b of opening structure 170 fitted to lid 116 with depression 123d of wind tunnel structure 123 while using depression 123d as a guide. This prevents displacement of lid 116, thereby preventing leakage of hot wind.

Opening structure 170 includes cut groove 170a on its inner circumference. A diameter of the inner circumference of opening structure 170 substantially coincides with a diameter of an outer periphery of beans loading cup 114. A length of cut groove 170a in a radial direction of opening structure 170 substantially coincides with a height of a protruded portion of protrusion 114b. Beans loading cup 114 can be inserted into hot air roasting machine 100 in the negative Z-direction 175a only at a position where protrusion 114b is engaged with cut groove 170a.

Cut groove 170a is connected to first groove 171 extending in the negative Z-direction. The first groove is connected to second groove 172 that is orthogonal to first groove 171. FIG. 18 shows first direction 175a in which first groove 171 extends, and second direction 175b in which second groove 172 extends. Note that second groove 172 clearly serves as a groove when opening structure 170 is fitted in hot air roasting machine 100. A position in the negative Z-direction of second groove 172 is shown by a broken line, for reference. The structure indicated by the broken line is included in wind tunnel structure 123.

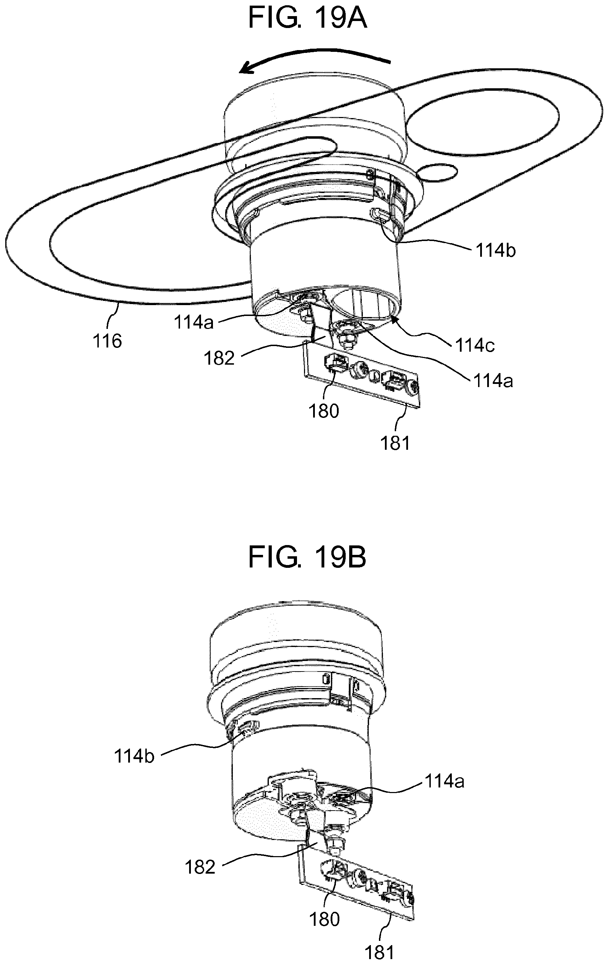

Beans loading cup 114 is inserted along first direction 175a to a position where grip 114d touches opening structure 170. A position of beans loading cup 114 in this state is referred to as a "first position" for convenience. FIG. 19A is a transparent view showing beans loading cup 114 inserted to the first position. FIG. 19A shows an outline of lid 116 for reference.

When beans loading cup 114 is in the first position, a magnetic field formed by two magnets 114a is detected by magnetic sensor 180 disposed on hot air roasting machine 100. Magnetic sensor 180 is a Hall element, for example. This configuration allows a central processing unit (CPU) of hot air roasting machine 100 described below to learn that beans loading cup 114 is inserted into hot air roasting machine 100. A detailed structure to detect the magnitude of the magnetic field will be described later. Note that in the first position, opening 114c of beans loading cup 114 coincides with the opening of hot air roasting machine 100. Thus, beans loading cup 114 is communicated with roasting chamber 126. Note that the opening of hot air roasting machine 100 indicates an opening provided on wind tunnel structure 123 in the present exemplary embodiment.

In the first position, beans loading cup 114 is rotatable in the second direction. When rotated to a certain position, beans loading cup 114 reaches a position where the rotation stops. A position of beans loading cup 114 in this state is referred to as a "second position" for convenience. FIG. 19B is a transparent view showing beans loading cup 114 inserted to the second position. It is clear from comparison between FIGS. 19A and 19B that protrusion 114b is positioned differently from each other. Note that in the second position, opening 114c of beans loading cup 114 does not coincide with the opening on hot air roasting machine 100. In other words, opening 114c of beans loading cup 114 is closed with wind tunnel structure 123, so that beans loading cup 114 and roasting chamber 126 do not communicate with each other. When beans loading cup 114 is in the second position, hot air roasting machine 100 performs a preheating step.

A user loads beans loading cup 114 in the second position with green beans, and then rotates beans loading cup 114 in the opposite direction after the preheating step is finished. This puts beans loading cup 114 in the first position again. When beans loading cup 114 reaches the first position, the green beans loaded into beans loading cup 114 is discharged to roasting chamber 126. Then, hot air roasting machine 100 performs the roasting step when beans loading cup 114 is returned to the second position.

In the above description, beans loading cup 114 has protrusion 114b and opening structure 170 has a groove. However, this configuration is one example. Beans loading cup 114 may have a groove, and opening structure 170 may have a protrusion.

In the present exemplary embodiment, beans loading cup 114 has a columnar shape, and is rotatable along an X-Y plane. As another configuration example, the beans loading cup may have a rectangular parallelepiped shape (or a box shape). In this case, the opening structure has a substantially rectangular shape. The beans loading cup is inserted in the opening structure along the sides in the Z-direction of the beans loading cup, and is slidable along the sides in the X-direction or the Y-direction of the beans loading cup. In the same manner as columnar-shaped beans loading cup 114, the beans loading cup having a rectangular parallelepiped shape has also openings on its upper surface and part of its bottom surface. When the beans loading cup is inserted and in the first position, green beans are allowed to move from the opening at the bottom surface to roasting chamber 126, and when the beans loading cup is slid to the second position, the movement of the green beans from the opening at the bottom surface to roasting chamber 126 is restricted.

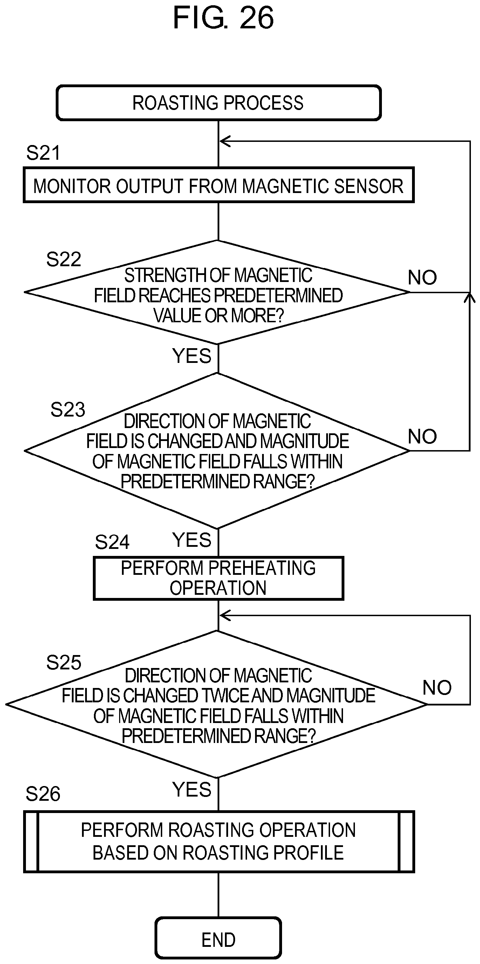

According to the above configuration, beans loading cup 114 cannot reach the first position and then cannot be rotated to the second position unless protrusion 114b of beans loading cup 114 is engaged with cut groove 170a and is not inserted along first groove 171. Conversely, beans loading cup 114 cannot be inserted normally and cannot be moved to the second position in the case where a foreign substance, such as a green bean, is stuck in first groove 171. The same can be applied to the case where a foreign substance is stuck in second groove 172. Hot air roasting machine 100 allows the preheating operation and then the roasting operation in condition that beans loading cup 114 is positioned in the first position and the second position, as described later with reference to FIG. 26. Hot air roasting machine 100 is provided with a function to stop its operation in case of entry of a foreign substance by employing a structure in which protrusion 114b is engaged with first groove 171 and further with second groove 172.

Here, a structure for detecting the magnetic field shown in FIGS. 19A and 19B is described.

In the present exemplary embodiment, an opening for inserting beans loading cup 114 is provided on wind tunnel structure 123. When beans loading cup 114 is inserted in hot air roasting machine 100 and reaches the first position, two magnets 114a of beans loading cup 114 comes into contact with wind tunnel structure 123. Thus, near a reaching position of two magnets 114a is normally sufficient for disposing magnetic sensor 180.

However, wind tunnel structure 123 reaches a high temperature as described above. If magnetic sensor 180, which is an electronic component, is disposed near wind tunnel structure 123, magnetic sensor 180 is heated beyond its allowable temperature limit.

In view of this, the inventors of the present application have designed magnetic sensor 180 to be mounted on substrate 181 that is positioned away from wind tunnel structure 123 as shown in FIGS. 19A and 19B. The inventors have employed sheet metal 182 formed of a soft magnetic material, of which magnetization increases corresponding to the magnitude of the magnetic field, to detect a magnetic field of magnets 114a.

As shown in the figures, one end of sheet metal 182 extends to a back side of magnetic sensor 180 with substrate 181 being interposed in-between. The other end of sheet metal 182 is disposed near a reaching position of magnets 114a of beans loading cup 114 at the time when beans loading cup 114 reaches the first position. Thus, magnetic sensor 180 is disposed away from two magnets 114a by at least a distance corresponding to a length of sheet metal 182. However, the magnetization of sheet metal 182 varies depending on the magnitude of the magnetic field generated by two magnets 114a, which enables magnetic sensor 180 to detect the magnetic field of the magnets based on the magnetization of sheet metal 182. This configuration reduces thermal influence on magnetic sensor 180 and prevents thermal runaway of magnetic sensor 180, even if wind tunnel structure 123 and beans loading cup 114 reach a high temperature during a roasting operation.

Next, an operation of hot air roasting machine 100 is described. In the present exemplary embodiment, hot air roasting machine 100 acquires a roasting profile by using an information provision system relating to green coffee beans. The roasting profile is control information for controlling hot air roasting machine 100 possessed by a user. The roasting profile includes, for example, a temperature profile indicating a relationship between roasting time and roasting temperatures in hot air roasting machine 100, and a rotation speed profile indicating a relationship between roasting time and rotation numbers per unit time of fan motor 120a of hot air roasting machine 100.

A user obtains the roasting profile using his/her terminal device, and transmits the obtained roasting profile to hot air roasting machine 100 wirelessly. Hot air roasting machine 100 performs roasting of green beans in accordance with the received roasting profile.

Note that the roasting profile may be prepared in advance for each kind of green beans by a coffee roaster who has excellent skills in roasting at the request of a green bean provider. The kind of green beans indicates classification of green beans based on producing areas, farms, brands, and the like of green beans. Typically, a coffee roaster determines a pair of a temperature profile and a rotation speed profile considered to be appropriate for roasting beans by using a hot air roasting machine having the same performance as hot air roasting machine 100 commercially available to a user.

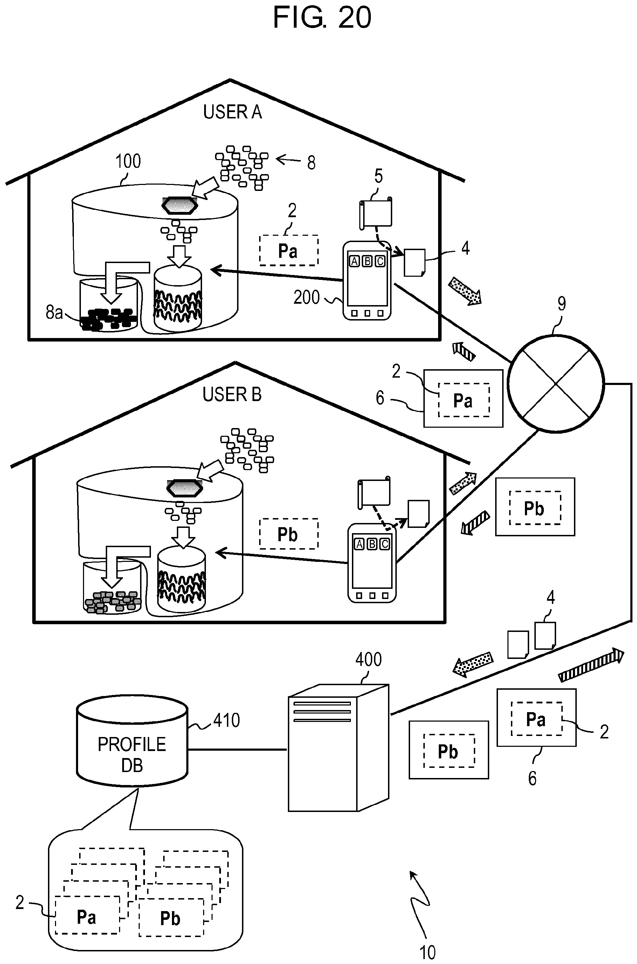

FIG. 20 shows a configuration of information provision system 10. The steps for a user to obtain a roasting profile through information provision system 10 are described below. FIG. 20 shows user A and another user B. To avoid redundancy in the following description, only user A is described below, but the same description can be applied to user B.

User A has hot air roasting machine 100 and terminal device 200. For example, terminal device 200 is a smartphone with a camera. The user photographs (reads) information code 5 with the camera of terminal device 200. In the present exemplary embodiment, information code 5 is information for obtaining a roasting profile of green beans shown on the packaging container of the green beans purchased by a user. Terminal device 200 of user A extracts identification information 4 of green beans from information code 5 attached to a packaging container of the green beans, and acquires attribute information of the green beans based on identification information 4. For example, the identification information may be a product number, and information code 5 may be QR code (registered trademark). As a technique to generate QR code (registered trademark) from character information is known to the public, the detailed description thereof is omitted. In the present specification, information code 5 and identification information of green beans are described as different from each other, but they are not necessarily different from each other. For example, identification information may be used as information code 5 as it is.

For example, a signal processing circuit (a signal processor or a CPU) of terminal device 200 executes an application program, and extracts identification information 4 from information code 5 thus read. Alternatively, a dedicated processing circuit (digital signal processor (DSP)) for terminal device 200 extracts identification information 4 from the information code thus read.

Terminal device 200 transmits identification information 4 thus acquired to database (DB) server 400 of a green bean provider through communication network 9, and requests transmission of attribute information 6 of the green beans. Communication network 9 is the Internet, for example.

Attribute information 6 includes one or more roasting profiles 2 of the green beans. DB server 400 transmits attribute information 6 of the green beans stored in advance together with roasting profile 2 to terminal device 200 of the user through communication network 9. Terminal device 200 receives attribute information 6.

Terminal device 200 of the user extracts roasting profile 2 from attribute information 6 thus acquired, and transmits extracted roasting profile 2 to hot air roasting machine 100 of the user. Hot air roasting machine 100 receives roasting profile 2, and sets roasting profile 2 as control information before starting a roasting operation. This enables hot air roasting machine 100 to roast the green beans under the same condition that a coffee roaster does. Upon completion of the roasting, the user can obtain beans 8a that have been roasted in accordance with roasting profile 2 and enjoy coffee by grinding the beans.

Roasting work requires temperature control, air blowing control, and time management to be performed independently in a suitable manner for each kind of green beans. Thus, the roasting work takes time and effort to be performed to a satisfactory level by ordinary people. Regarding the temperature control, for example, a difference of 1 °C at an initial stage just after start of roasting is said to cause a large difference in flavor of coffee after roasting.

In the present exemplary embodiment, a roasting profile determined by a coffee roaster is prepared and is set on hot air roasting machine 100 by using terminal device 200 of a user. This configuration enables appropriate roasting to be easily performed, thereby enhancing user's satisfaction through an operation of roasting green beans.

Attribute information 6 includes various kinds of information in addition to roasting profile 2, as described later. The various kinds of information include, for example, accompanying information about the green beans, such as information on a producing area and a farm of the green beans, and a coffee roaster, access information for connecting to a server, and priority information indicating a roasting profile highly recommended by a coffee roaster in the case where a plurality of roasting profiles exist. The user can refer to these kinds of information through terminal device 200. This allows the user to learn deeply about the green beans and enjoy coffee more deeply.

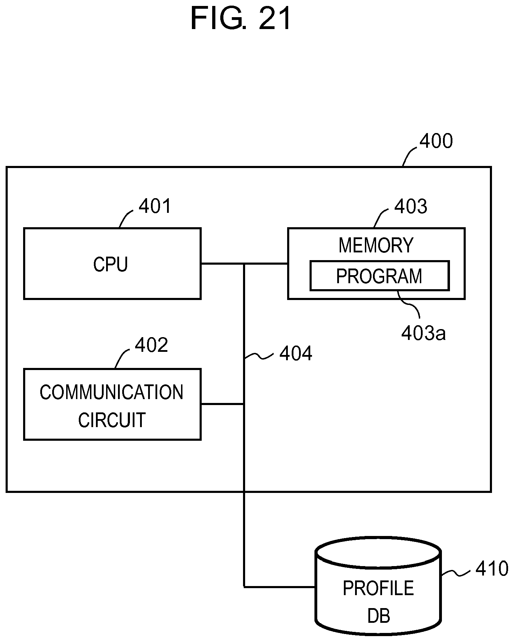

Hereinafter, hardware structures for information processing of DB server 400, terminal device 200, and hot air roasting machine 100 are described with reference to FIGS. 21 to 24.

FIG. 21 is a hardware configuration diagram of DB server 400 operated by a green bean provider. DB server 400 is a computer system including signal processing circuit 401 (hereinafter, referred to as "CPU 401") 401, communication circuit 402, and memory 403. CPU 401, communication circuit 402, and memory 403 are connected to communication bus 404, and are configured to transmit and receive data mutually. Communication circuit 402 performs wired communication conforming to the Ethernet (registered trademark) standard, for example.

Computer program 403a read out from a nonvolatile memory (not shown) is expanded in memory 403. Computer program 403a includes, for example, a program for constructing a profile database (DB), and a management program for a profile DB. CPU 401 executes these computer programs to perform communication and processing described later.

Profile database (DB) 410 is connected to DB server 400. Profile DB 410 stores roasting profiles 2 that a green bean provider has received from a coffee roaster.

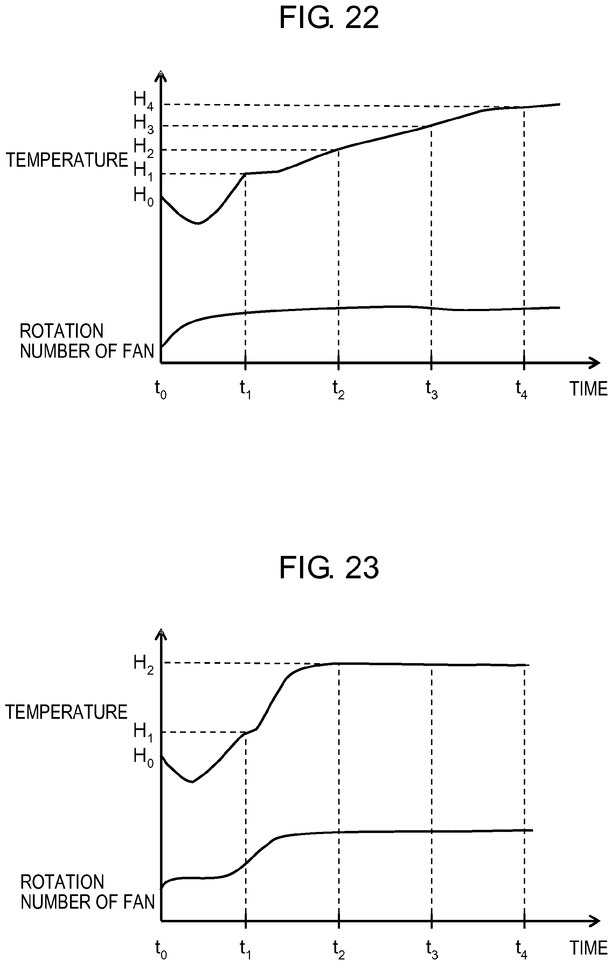

FIGS. 22 and 23 show examples of different roasting profiles 2. The horizontal axis represents roasting time t and the vertical axis represents a roasting temperature and a rotation number of fan motor 120a. The roasting profile is control information that specifies a method for roasting each kind of green beans to be performed by hot air roasting machine 100. The roasting profile includes a temperature profile indicating a relationship between roasting time and roasting temperatures in hot air roasting machine 100, and a rotation speed profile indicating a relationship between roasting time and rotation numbers of fan motor 120a.

The change in temperature of the two roasting profiles shown in FIGS. 22 and 23 are the same before time t1, but are different from each other after time ti. In addition, these figures show that the rotation numbers of fan motor 120a are different from each other from the beginning of time to.

Conditions for roasting, such as temperatures and air volumes, are different from each other like this, because characteristics of green beans and target degrees of roasting, for example, are different from each other. The "characteristics of green beans" include a size, a moisture content, carbohydrates, an acid, a lipid, an amino acid, a protein, a caffeine, a chlorogenic acid, and the like of individual green beans. The "degrees of roasting" include "light roast", "medium roast", and "dark roast".

At least three roasting profiles having different target degrees of roasting, that is, three roasting profiles for light roast, medium roast, and dark roast may be prepared for each kind of green beans.

Note that, the degrees of roasting can be further subdivided into, for example, light roast, cinnamon roast, medium roast, high roast, city roast, full city roast, Italian roast, and French roast in the order from light roast to dark roast.

Hot air roasting machine 100 controls temperatures and rotation numbers of fan motor 120a in accordance with the roasting profiles shown in FIGS. 22 and 23. A microcontroller (described later) of hot air roasting machine 100 adjusts an input to heater unit 127 based on an output value from temperature sensor 143. A temperature inside roasting chamber 126 of hot air roasting machine 100 is controlled in this manner.

Note that waveforms shown in FIGS. 22 and 23 are expressed as continuous functions for easy understanding. However, actual roasting profiles may be prepared as a data string that indicates temperatures and rotation numbers for every lapsed time with reference to start time of roasting.

Profile DB 410 is also connected to bus 404 through a communication interface (not shown), and searching, updating, etc. of profile DB 410 may be performed by CPU 401 and the like. Profile DB 410 may be provided in DB server 400.

The operation of DB server 400 will be described in detail later.

FIG. 24 is a hardware configuration diagram of user terminal device 200 and hot air roasting machine 100.

Terminal device 200 is a computer system including signal processing circuit 201 (hereinafter, referred to as "CPU 201"), wireless communication circuit 202, input interface (I/F) device 203, memory 204, image processing circuit 205, display 206, camera module 207, storage 208, and speaker 209. For example, terminal device 200 is a smartphone or a tablet type computer. Each of the above components of terminal device 200 is connected to communication bus 210 and is configured to transmit and receive data mutually.

In the present exemplary embodiment, communication circuit 202 is capable of performing communication conforming to a plurality of communication standards. For example, wireless communication circuit 202 can perform communication by a communication system provided by communications companies (for example, code-division multiple access (CDMA) communication), communication of the Wi-Fi (registered trademark) standard, and communication of the Bluetooth (registered trademark) standard. The former two may be used for communication with DB server 400, for example. The communication of the Bluetooth (registered trademark) standard may be used for communication with hot air roasting machine 100.

Input I/F device 203 is a device that allows a user to input instructions to terminal device 200. In the present exemplary embodiment, input I/F device 203 is a touch screen panel overlaid on display 206. However, the touch screen panel is one example of input I/F device 203. Input I/F device 203 may be a physical button. Alternatively, input I/F device 203 may be configured by a microphone and a voice recognition circuit. Input I/F device 203 recognizes user's voice and inputs a user's instruction to terminal device 200.

Computer program 204a read out from a nonvolatile memory (not shown) is expanded in memory 204. Computer program 204a is provided, for example, by a green bean provider, and includes description of a processing procedure to be executed by terminal device 200 designed by the green bean provider. For example, computer program 204a causes camera module 207 to start and photograph an information code on instructions of CPU 201, and causes CPU 201 to extract identification information of green beans from the information code. Then, computer program 204a causes CPU 201 to communicate with DB server 400 and receive attribute information of green beans from DB server 400, and causes display 206 to display characters and images. At this time, computer program 204a may cause image processing circuit 205 to perform processing for display. In addition, computer program 204a causes CPU 201 to store the received attribute information in storage 208.

Image processing circuit 205 is a circuit that performs calculation for displaying characters, figures, and the like on display 206.

Display 206 is one example of an output device. Display 206 is, for example, a liquid crystal display panel or an organic electro-luminescence (EL) panel, and displays characters and/or images based on a calculation result of image processing circuit 205.

Camera module 207 is one example of a so-called imaging device. Camera module 207 includes, for example, one or more lenses, an actuator that moves the lenses in an optical axis direction, and an image sensor. In the present exemplary embodiment, camera module 207 is used for reading QR code (registered trademark).

Storage 208 is, for example, a nonvolatile flash memory, and stores attribute information and the like of the green beans acquired by terminal device 200.

Speaker 209 is one example of an output device. In the present exemplary embodiment, speaker 209 outputs an explanation of green beans in the form of voice. This explanation is an explanation about a producing area and a farm of the green beans, and a coffee roaster, and is prepared in advance as accompanying information.

The operations of terminal device 200 will be described in detail later.

Hot air roasting machine 100 includes microcontroller 301, wireless communication circuit 302, memory 303, fan motor 120a, and heater unit 127. Each of the above described components of hot air roasting machine 100 is connected to communication bus 307, and is configured to transmit and receive data mutually. These components are mounted on, for example, electronic circuit board 113.

In the present exemplary embodiment, communication circuit 302 is capable of performing communication of the Bluetooth (registered trademark) standard. Wireless communication circuit 302 is capable of performing communication of this standard with wireless communication circuit 202 of terminal device 200.

Microcontroller 301 communicates with terminal device 200 through wireless communication circuit 302, receives roasting profile 2 from terminal device 200, temporarily stores roasting profile 2 in memory 303, and accumulates roasting profile 2 in storage 306. Microcontroller 301 controls a rotation speed (rotation number per unit time, hereinafter referred to as "rotation number") of fan motor 120a at the time of a roasting operation using roasting profile 2, and further controls a temperature of heater unit 127.

Microcontroller 301 in FIG. 24 stores a computer program in advance in an electrically erasable programmable read-only memory (EEPROM) (not shown) disposed inside microcontroller 301 so as to perform a predetermined operation. Microcontroller 301 uses an internal buffer and register to execute the computer program. Note that, also in hot air roasting machine 100, microcontroller 301 may execute a computer program expanded in memory 303, in the same manner as the examples of DB server 400 and terminal device 200.

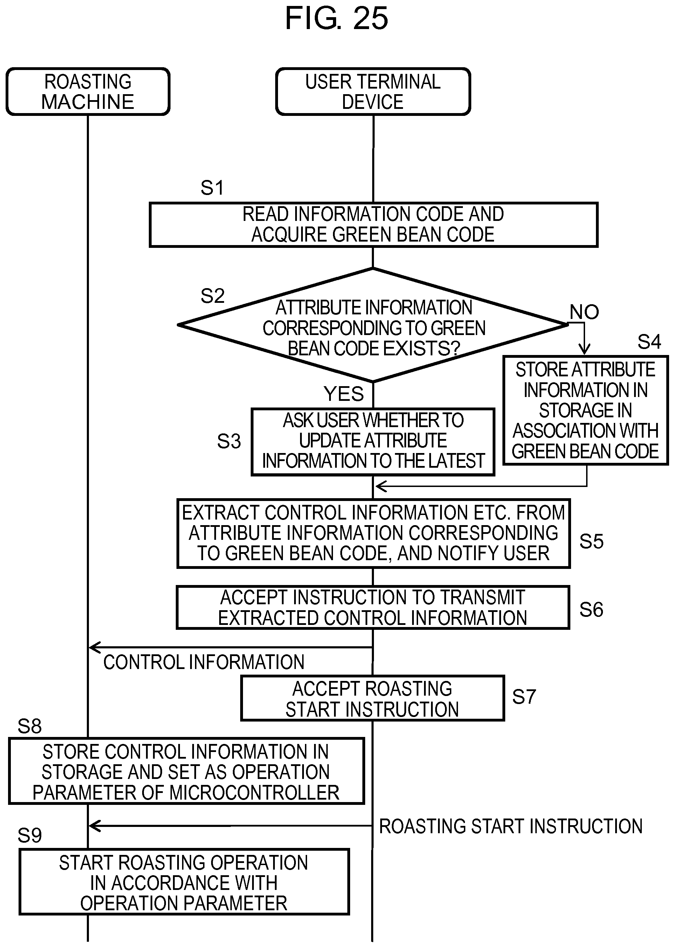

FIG. 25 is a flowchart showing communication between hot air roasting machine 100 and user terminal device 200, and processing steps of each of hot air roasting machine 100 and user terminal device 200.

In step S1, CPU 201 of terminal device 200 reads an information code attached to a packaging container through terminal device 200 to acquire a green bean code.

In step S2, CPU 201 determines whether or not the attribute information corresponding to the green bean code exists in storage 208. For example, CPU 201 determines whether or not the attribute information having a green bean code the same as the acquired green bean code exists. A product name can be used instead of the green bean code. When the attribute information having a green bean code the same as the acquired green bean code exists, the processing proceeds to step S3, and when the processing does not exist, the processing proceeds to step S4.

In step S3, CPU 201 asks a user whether to update the attribute information to the latest information. When CPU 201 receives an instruction to update the attribute information to the latest information, the processing proceeds to step S5. On the other hand, in step S4, CPU 201 stores the attribute information in storage 208 in association with the green bean code.

The processing after step S5 relates to processing of transmitting control information to hot air roasting machine 100.

In step S5, CPU 201 of terminal device 200 extracts control information (roasting profile), priority information, and the like from the attribute information corresponding to the green bean code, and displays a notification for prompting a user to select a roasting method.

In step S6, CPU 201 accepts, for example, a touch to a transmission button displayed on display 206 as an instruction to transmit control information corresponding to a selected roasting method. CPU 201 transmits the control information (roasting profile) corresponding to the selected roasting method to hot air roasting machine 100.

Note that, CPU 201 desirably transmits only the control information (roasting profile) corresponding to the selected roasting method to hot air roasting machine 100. For example, one of the three roasting profiles is transmitted to hot air roasting machine 100 even when three roasting profiles for light roast, medium roast, and dark roast are stored in storage 208. Since this suppresses the amount of data to be transmitted and received, it is possible to reduce the capacity of memory 303 or storage 306 of hot air roasting machine 100, and thus roasting machine 100 can be provided at low cost.

In step S8, microcontroller 301 of hot air roasting machine 100 receives the control information and stores the control information in storage 306. Further, microcontroller 301 sets the received control information as an operation parameter of microcontroller 301. Microcontroller 301 holds in advance a table, a function, or a program for determining a current value to be fed to fan motor 120a and heater unit 127 in accordance with the operation parameter. When the operation parameter is set, microcontroller 301 can cause green beans to be roasted in accordance with the operation parameter.

In step S9, microcontroller 301 of hot air roasting machine 100 starts a roasting operation in accordance with the set operation parameter.

A series of basic operations of hot air roasting machine 100 have been described above. Then, operations before starting the roasting operations are described below with reference to FIG. 26.

FIG. 26 is a flowchart showing the steps from attaching beans loading cup 114 to executing a roasting operation. The processing shown in FIG. 26 is performed after hot air roasting machine 100 is energized. Aside from the processing shown in FIG. 26, microcontroller 301 receives data of the roasting profile from terminal device 200 of a user, and stores the data in memory 303.

In step S21, microcontroller 301 of hot air roasting machine 100 monitors output from magnetic sensor 180 (see FIGS. 19A and 19B).

In step S22, microcontroller 301 determines whether or not the strength of the magnetic field reaches a predetermined value or more based on the output from magnetic sensor 180. This determination step is equivalent to determination of whether or not beans loading cup 114 is attached to hot air roasting machine 100. As described above, the bottom surface of beans loading cup 114 includes magnets 114a (see FIG. 16). When beans loading cup 114 is inserted in opening structure 170 and reaches the first position, the strength of the magnetic field generated by magnets 114a reaches a predetermined value or more. As a result, microcontroller 301 determines that the strength of the magnetic field reaches a predetermined value or more. The process then proceeds to step S23. On the other hand, the process returns to step S21 when the strength of the magnetic field does not reach the predetermined value.

The "predetermined value" can be determined in advance. For example, in manufacturing hot air roasting machines 100, a manufacturer of hot air roasting machines 100 knows in advance the strength of the magnetic field generated by magnets 114a. The "predetermined value" may be determined based on the strength of the magnetic field at the time when beans loading cup 114 is in the first position.

In step S23, microcontroller 301 determines whether or not the direction of the magnetic field has been changed and the magnitude of the magnetic field falls within a predetermined range. This determination step is equivalent to determination of whether or not beans loading cup 114 has been rotated and reached the second position. When beans loading cup 114 is rotated, the position of magnets 114a changes accordingly, and thus the direction and the magnitude of the magnetic field to be detected by magnetic sensor 180 changes accordingly. When beans loading cup 114 is rotated and reaches the second position, the direction and the strength of the magnetic field generated by magnets 114a differ from those at the time when beans loading cup 114 is in the first position. Microcontroller 301 can determine whether or not beans loading cup 114 has reached the second position by measuring and setting in advance the direction and the magnitude of the magnetic field at the time when the beans loading cup 114 is in the second position. When the conditions of the change in direction of the magnetic field and the strength of the magnetic field are satisfied in step S23, the process proceeds to step S24, and when the conditions are not satisfied, the process returns to step S21.

In step S24, microcontroller 301 performs a preheating operation. In other words, the preheating operation is not performed unless beans loading cup 114 is attached to the first position, then rotated and reaches the second position. As the preheating operation, microcontroller 301 causes predetermined magnitude of an electric current to pass through heater unit 127. The preheating operation is terminated upon reaching a predetermined temperature. During the preheating operation, a user loads green beans into beans loading cup 114 when beans loading cup 114 is in the second position.

In step S25, microcontroller 301 determines whether or not the direction of the magnetic field has been changed twice and the magnitude of the magnetic field falls within a predetermined range. This determination step is equivalent to determination of whether or not beans loading cup 114 has been rotated reversely, returned to the first position, and then placed in the second position again. When beans loading cup 114 returns to the first position, the loaded green beans are discharged into roasting chamber 126 from opening 114c of beans loading cup 114. Then, preparation for roasting is finished when beans loading cup 114 returns to the second position with the opening being closed.

In step S26, microcontroller 301 start a roasting operation based on a roasting profile that has been acquired in advance.

As is clear from the above description, microcontroller 301 permits hot air roasting machine 100 to start operation when beans loading cup 114 is inserted in hot air roasting machine 100 and magnetic sensor 180 detects the magnetic field of two magnets 114a. As a result, hot air roasting machine 100 performs the preheating operation and the roasting operation.

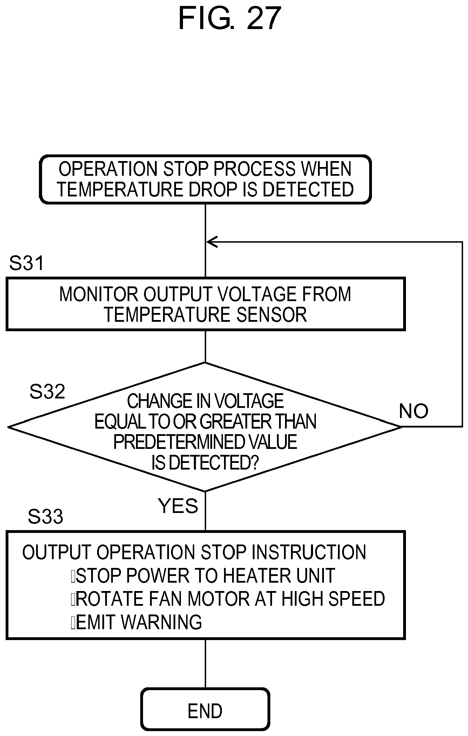

Then, an emergency stop operation based on output from temperature sensor 143 is described below with reference to FIG. 27. In the case where liquid enters hot air roasting machine 100 during the preheating operation or the roasting operation, hot air roasting machine 100 needs to stop its operation immediately, since a temperature is extremely high inside housing 110. The inventors of the present application have employed temperature sensor 143 to detect entry of liquid.

Temperature sensor 143 is configured to detect a temperature of the air heated by heater unit 127. However, as shown in FIG. 13B, temperature sensor 143 is disposed at a position easily exposed to the liquid if liquid is introduced through beans loading cup 114. If liquid is splashed onto temperature sensor 143, a temperature of temperature sensor 143 may decrease rapidly, which enables immediate detection of the entry of liquid.

FIG. 27 is a flowchart showing processing steps when a temperature drop is detected by temperature sensor 143.

In step S31, microcontroller 301 monitors an output voltage from temperature sensor 143. Temperature sensor 143 outputs a voltage corresponding to a level of the temperature. Microcontroller 301 is configured to estimate a present temperature based on the magnitude of the present output voltage. The output voltage of temperature sensor 143 changes by several mV for example, as the temperature changes by 1 °C. Microcontroller 301 can detect the temperature change based on the magnitude of the change in the output voltage value.

In step S32, microcontroller 301 determines whether or not a change in voltage equal to or greater than a predetermined value has been detected. In the case where liquid is splashed onto temperature sensor 143 during the preheating or roasting operation, it is considered that the temperature would change by 20 °C or more, for example. Information on the amount of a change in voltage corresponding to the temperature change of 20 °C is prepared in advance, and is stored in, for example, memory 303.

When microcontroller 301 detects a change in voltage equal to or greater than a predetermined value, the process proceeds to step S33, otherwise the process returns to step S31.

In step S33, microcontroller 301 outputs various instructions. For example, microcontroller 301 outputs instructions to stop power to heater unit 127, to rotate fan motor 120a at high speed for cooling inside housing 110, and to cause a speaker (not shown) to emit a warning sound. Further, microcontroller 301 may transmit a warning to terminal device 200 to cause warning text to be displayed on display 206 and to cause a warning sound to be emitted from speaker 209.

Instead of or together with the example using temperature sensor 143, a liquid detection sensor to detect received liquid may be provided at a bottom surface inside roasting drum cover 121. Providing the liquid detection sensor ensures reliable detection of entry of liquid. In the case where the liquid detection sensor detects liquid, microcontroller 301 has only to perform the above processing of step S33.

In the above description, roasting drum 122 and wind tunnel structure 123 are formed of a metal material, but this is one example. Any materials other than a metal material may be used. Any materials may be used as long as the material has a thermal conductivity of a predetermined value or more, for example 100 (W•m⁻¹•K⁻¹) at a temperature of about 200 °C that is a temperature at the time of roasting.

Although the above exemplary embodiment describes an aspect of roasting coffee green beans, this is merely an example. The above description may also be applied to a hot air roasting machine that roasts, for example, nuts such as almond and walnut, or tea leaves, and a terminal device that transmits control information to the hot air roasting machine.

In addition, information code 5 is described as QR code (registered trademark) in the above exemplary embodiment, but may be a barcode (JAN code). Further, information code 5 is photographed by the camera of terminal device 200 and read optically in the exemplary embodiment, but other aspects may be employed. For example, information code 5 may be recorded on a magnetic tape or the like, and may be read magnetically by terminal device 200 using a magnetic head. Alternatively, information code 5 may be recorded in a storage device (for example, a flash memory) of a wireless communication tag, and may be read by terminal device 200 by wireless communication. Alternatively, a name and the like on a label attached to a packaging container may be read and input in terminal device 200 by a user.

As described above, a first invention includes: a housing; a fan unit configured to suck air into the housing; a roasting drum that is hollow inside and includes an air inlet and a roasting chamber; a heater unit disposed between the air inlet and the roasting chamber in the roasting drum, and configured to heat the air introduced from the air inlet; and a roasting drum cover that is disposed to cover a part of an outer peripheral wall of the roasting drum and provided with a gap from the part of an outer peripheral wall of the roasting drum. In the hot air roasting machine, the roasting drum comprises a material that has a thermal conductivity of a predetermined value or more, and an inner peripheral wall of the roasting drum cover and the part of the outer peripheral wall of the roasting drum form a gap air passage configured to guide the air that has been sucked by the fan unit into the air inlet of the roasting drum.

According to the above configuration, the roasting drum is formed of a material that has a thermal conductivity of a predetermined value or more, and thus, is heated by energizing a heater. The air passing through the gap air passage is heated by heat from the outer peripheral wall of the roasting drum before reaching the air inlet of the roasting drum. This configuration can enhance heating efficiency as compared to a case in which air at a low temperature is heated only in the heater unit.

According to a second invention, an external surface of the roasting drum may comprise a metal material.

According to a third invention, the metal material on the external surface of the roasting drum may be aluminum.

According to a fourth invention, the roasting drum cover may be disposed to cover at least a part of the outer peripheral wall of the roasting drum corresponding to a position where the heater unit is disposed.

According to a fifth invention, the roasting drum cover may be disposed to cover another part of the outer peripheral wall of the roasting drum corresponding to a position where the roasting chamber is disposed.

According to a sixth invention, an exhaust port configured to exhaust heated air that has passed the roasting drum to an outside of the housing; and a wind tunnel structure that connects the roasting chamber of the roasting drum and the exhaust port, and has an air passage configured to guide the heated air discharged from the roasting drum to the exhaust port, may further be provided, and the air sucked by the fan unit may be brought into contact with an outer peripheral wall of the wind tunnel structure and reach the gap air passage.

According to a seventh invention, the wind tunnel structure may comprises a metal material.

According to the above sixth and seventh inventions, the air absorbs heat from the wind tunnel structure by being brought into contact with the outer peripheral wall of the wind tunnel structure. This configuration greatly enhances the heating efficiency, as the air is further heated before reaching the gap air passage. This configuration can cool the wind tunnel structure at the same time. In particular, heat exchange efficiency can be enhanced by forming the wind tunnel structure of a metal material.

In an eighth invention, the heater unit may include: at least one heating wire; and at least one flow-regulating plate disposed inside the roasting drum to regulate a flow of the air introduced from the air inlet.

In a ninth invention, the at least one flow-regulating plate may have a shape with a gap or a size to allow the air to pass, and the at least one heating wire may be disposed near the gap.

With this configuration, the air flows through a space where the heating wire is provided, as the heating wire is disposed near the gap of the flow-regulating plate. With this configuration, the air is heated efficiently.

In a tenth invention, the at least one heating wire and the gap may be formed along an inner peripheral wall of the roasting drum.

This configuration ensures a greater length of the heating wire, as the heating wire is disposed along the inner peripheral wall of the roasting drum. Since a long heating wire can be employed, a resistance value of the heating wire increases, which increases the amount of heat generation effectively.

In an eleventh invention, the at least one flow-regulating plate includes a first flow-regulating plate and a second flow-regulating plate. The first flow-regulating plate has a size to form a predetermined gap between an outer periphery of the first flow-regulating plate and an inner peripheral wall of the roasting drum, the at least one heating wire is disposed near the predetermined gap, and the second flow-regulating plate is disposed downstream of the first flow-regulating plate and the at least one heating wire as viewed from the air inlet. The second flow-regulating plate may include an opening at a center portion of the roasting drum while in contact with the inner peripheral wall of the roasting drum.

With this configuration, the air that has blown in from the air inlet moves along the inner peripheral wall due to the existence of the first flow-regulating plate. With this configuration, the air is heated effectively by the heating wire disposed near the inner peripheral wall. Since the heating wire is disposed along the inner peripheral wall of the roasting drum, a greater length of the heating wire is ensured. Since a long heating wire can be employed, a resistance value of the heating wire increases, which increases the amount of heat generation effectively. Since the heated air blows into the roasting chamber from the opening at the center portion of the roasting drum due to the second flow-regulating plate, it is unlikely to cause nonuniformity of heat inside the roasting chamber.

In a twelfth invention, a partition plate having a plurality of slits that allow heated air to pass may further be provided, the partition plate may be disposed between the second flow-regulating plate and the roasting chamber inside the roasting drum, and each of the slits may be disposed at a position separated from a center portion of the partition plate in a direction toward the inner peripheral wall.

With this configuration, the partition plate in the roasting chamber has the slits between the center portion and the inner peripheral wall of the roasting drum, and thus the heated air gathered at the center portion of the roasting drum by the second flow-regulating plate is guided toward the inner peripheral wall of the roasting drum and discharged from the slits into the roasting chamber. This configuration achieves uniform temperature of the heated air blown into the roasting chamber.

In a thirteenth invention, the at least one flow-regulating plate may comprise mica.

In a fourteenth invention, the at least one heating wire may include a plurality of heating wires, and the heating wires may be arranged along an inner peripheral wall of the roasting drum.

In a fifteenth invention, the wind tunnel structure may be secured to the housing through a heat insulating component.

In a sixteenth invention, the heat insulating component may comprise resin.

In a seventeenth invention, an electronic circuit board may further be provided along an air passage between the fan unit and an external surface of the wind tunnel structure.

With this configuration, various electronic components mounted on the electronic circuit board generate heat during operation of the hot air roasting machine. The air at a low temperature sucked by the fan unit comes into contact with the electronic circuit board and absorbs heat from the electronic circuit board. This configuration greatly enhances the heating efficiency, as the air is further heated before reaching the gap air passage. At the same time, the air at a low temperature absorbs heat from the electronic components and the electronic circuit board, and thus the electronic components and the electronic circuit board are cooled efficiently.

In an eighteenth invention, the electronic circuit board may be secured to an inside bottom surface of the housing near the fan unit.

In a nineteenth invention, the electronic circuit board may be secured by utilizing the roasting drum cover.

In a twentieth invention, the fan unit may include a fan and a fan motor, and may be disposed near an inside bottom surface of the housing, and the fan unit may be configured to suck the air inside the housing from a direction different from an axis of rotation of the fan.

In a twenty-first invention, the axis of rotation of the fan may be perpendicular to an external bottom surface of the housing, the external bottom surface may have a protruding cover that protrudes in a direction parallel to the axis of rotation and in an outward direction from the housing, and the protruding cover may have an opening to suck the air into the housing from a direction parallel to the external bottom surface.

In a twenty-second invention, the opening is a slit.

In a twenty-third invention, the opening may be a hole with mesh.

In a twenty-fourth invention, an electronic circuit board and a plate-like body between the fan unit and the roasting drum cover may further be provided, the plate-like body may be disposed between the fan unit and the electronic circuit board, and the plate-like body may be formed of a waterproof material, or has a waterproof coating.

According to this configuration, the partition plate is disposed between the fan unit and the circuit board, and is formed of a waterproof material or has a waterproof coating. This configuration prevents liquid from splashing onto the electronic circuit board even when liquid is sucked by the fan unit.

The inventors of the present application have taken into consideration the case where liquid such as water is poured into the hot air roasting machine. Current leakage may occur, if liquid such as water is poured into the hot air roasting machine and splashed directly onto the electronic circuit board. In view of this, the present specification describes the invention that prevents liquid from directly splashing onto the electronic circuit board even in the case where liquid such as water is poured erroneously or for other reasons. The specific description is as follows:

### (Notes regarding solution to problem)

[Note 1] A hot air roasting machine including: a housing; a fan unit configured to suck air into the housing; a roasting drum that is hollow inside and includes an air inlet and a roasting chamber; a heater unit disposed between the air inlet and the roasting chamber in the roasting drum, and configured to heat the air introduced from the air inlet; and a roasting drum cover that is disposed to cover a part of an outer peripheral wall of the roasting drum and away from the part of an outer peripheral wall with a gap being provided in-between, wherein the roasting drum is formed of a material that has a thermal conductivity of a predetermined value or more, wherein an inner peripheral wall of the roasting drum cover and the part of the outer peripheral wall of the roasting drum form a gap air passage configured to guide the air that has been sucked by the fan unit into the air inlet of the roasting drum, wherein an inlet through which an object to be roasted is put into the roasting chamber is further provided, and wherein the roasting drum cover receives the liquid that has passed the roasting drum in the case where liquid enters through the inlet.
[Note 2] The hot air roasting machine according to Note 1, wherein the roasting drum cover includes a drainpipe configured to drain the received liquid outside the housing.
[Note 3] The hot air roasting machine according to Note 1, wherein an inside of the roasting drum cover is inclined toward a joint portion between the roasting drum cover and the drainpipe.
[Note 4] The hot air roasting machine according to Note 1, wherein the drainpipe is disposed along an inside wall surface of the housing.
[Note 5] The hot air roasting machine according to Note 1, wherein the heater unit is disposed at a predetermined distance away from an internal bottom surface of the roasting drum cover.
[Note 6] The hot air roasting machine according to Note 5, wherein the predetermined distance is greater than a depth of the liquid when the roasting drum cover receives a predetermined amount of the liquid.
[Note 7] The hot air roasting machine according to Note 1, wherein a lower end of the roasting drum is disposed higher than the heater unit.
[Note 8] The hot air roasting machine according to Note 1, further including at least one insulating sheet between the roasting drum and the heater unit.
[Note 9] The hot air roasting machine according to Note 8, wherein the at least one insulating sheet is formed of mica.
[Note 10] The hot air roasting machine according to Note 9, wherein the at least one insulating sheet includes a plurality of insulating sheets disposed between the roasting drum and the heater unit.
[Note 11] The hot air roasting machine according to Note 1, further including a temperature sensor configured to detect a temperature of the air heated by the heater unit, wherein the heater unit includes at least one heating wire, and a first flow-regulating plate and a second flow-regulating plate that are disposed inside the roasting drum and regulate a flow of the air introduced from the air inlet, wherein the first flow-regulating plate has a size to form a predetermined gap between an outer periphery of the first flow-regulating plate and an inner peripheral wall of the roasting drum, wherein the at least one heating wire is disposed near the predetermined gap, and wherein the second flow-regulating plate is disposed downstream of the first flow-regulating plate and the at least one heating wire as viewed from the air inlet, and includes an opening at a center portion of the roasting drum while in contact with the inner peripheral wall of the roasting drum, and further includes a cutout at a position corresponding to a position of the temperature sensor.
[Note 12] The hot air roasting machine according to Note 11, further including a liquid detection sensor that is disposed at an internal bottom surface of the roasting drum cover, and is configured to detect the liquid.
[Note 13] The hot air roasting machine according to Note 12, further including a microcontroller configured to control operation of the hot air roasting machine, wherein the microcontroller causes the operation of the hot air roasting machine to stop when the liquid detection sensor detects existence of the liquid.
[Note 14] The hot air roasting machine according to Note 11, further including: a temperature sensor configured to measure a temperature of the air heated by the heater unit; and a microcontroller configured to control operation of the hot air roasting machine, wherein the microcontroller causes the operation of the hot air roasting machine to stop when the temperature sensor detects a temperature drop equal to or greater than a predetermined degree within a predetermined period of time.

According to the configuration of Note 1, the roasting drum cover receives the liquid when liquid is poured erroneously or for other reasons through the inlet for putting an object to be roasted, so that the liquid can be prevented from directly splashing onto the electronic circuit board. As a result, current leakage can be prevented.

According to the configuration of Note 4, a drainpipe is disposed near the inside wall surface of the housing, so that a distance can be provided between the drainpipe and components that should avoid liquid and are provided closely to one another at a center portion inside the housing.

According to the configuration of Note 6, a lower part of the roasting drum and the internal bottom surface of the roasting drum cover are disposed with a predetermined distance being provided in-between. Thus, the heater unit inside the roasting drum is not soaked in the liquid immediately, even when the roasting drum cover received liquid. Accordingly, the predetermined distance is set to be greater than a depth of the liquid when a predetermined amount of liquid, for example 200 ml, is received by the roasting drum cover, thereby ensuring that the heater unit is not soaked in the liquid even when liquid is erroneously poured up to a predetermined amount.

Current leakage may occur when both of the heater unit and the roasting drum are soaked in water. According to the configuration of Notes 7 and 8, the lower end of the roasting drum is disposed higher than the heater unit, thereby avoiding a situation in which both of the heater unit and the roasting drum are soaked in liquid simultaneously. In addition, current leakage can be prevented by providing an insulating sheet between the heater unit and the roasting drum.

### INDUSTRIAL APPLICABILITY

The present invention can be applied to a system having a hot air roasting machine in which a roasting profile is set by using a communication function and a terminal device having a function of transmitting the roasting profile to the hot air roasting machine.

### REFERENCE MARKS IN THE DRAWINGS

- 10: information provision system
- 100: hot air roasting machine
- 110: housing
- 111: switch
- 112: status display LED
- 113: electronic circuit board
- 114: beans loading cup
- 115: exhaust port
- 116: lid
- 117: container
- 120: fan unit
- 120a: fan motor
- 120b: fan
- 120c: air outlet
- 121: roasting drum cover
- 122: roasting drum
- 123: wind tunnel structure
- 124: discharge drum
- 125: gap air passage
- 126: roasting chamber
- 127: heater unit
- 128: spacer
- 200: terminal device
- 201: signal processing circuit (CPU)
- 202: wireless communication circuit
- 203: input interface (I/F) device
- 204: memory
- 205: image processing circuit
- 206: display
- 207: camera module
- 208: storage
- 209: speaker
- 210: communication bus
- 301: microcontroller
- 302: wireless communication circuit
- 303: memory
- 306: storage
- 307: communication bus
- 400: database (DB) server
- 401: signal processing circuit (CPU)
- 402: communication circuit
- 403: memory
- 404: communication bus

## Claims

1. A hot air roasting machine (100) comprising:
a housing (110);
a fan unit (120) configured to suck air into the housing (110);
a roasting drum (122) that is hollow inside and includes an air inlet and a roasting chamber (126);
a heater unit (127) disposed between the air inlet and the roasting chamber (126) in the roasting drum (122), and configured to heat the air introduced from the air inlet; and
a roasting drum cover (121) that is disposed to cover a part of an outer peripheral wall of the roasting drum (122) and provided with a gap from the part of an outer peripheral wall of the roasting drum (122),
wherein the roasting drum (122) comprises a material that has a thermal conductivity of a predetermined value or more,
**characterized in that**
an inner peripheral wall of the roasting drum cover (121) and the part of the outer peripheral wall of the roasting drum (122) form a gap air passage (125) configured to guide the air that has been sucked by the fan unit (120) into the air inlet of the roasting drum (122).

2. The hot air roasting machine (100) according to claim 1, wherein an external surface of the roasting drum (122) comprises a metal material.

3. The hot air roasting machine (100) according to claim 2, wherein the metal material is aluminum.

4. The hot air roasting machine (100) according to any one of claims 1 to 3, wherein the roasting drum cover (121) is disposed to cover at least a part of the outer peripheral wall of the roasting drum (122) corresponding to a position where the heater unit (127) is disposed.

5. The hot air roasting machine (100) according to claim 4, wherein the roasting drum cover (121) is disposed to cover another part of the outer peripheral wall of the roasting drum (122) corresponding to a position where the roasting chamber (126) is disposed.

6. The hot air roasting machine (100) according to any one of claims 1 to 5, further comprising:
an exhaust port (115) configured to exhaust heated air that has passed the roasting drum (122) to an outside of the housing (110); and
a wind tunnel structure (123) that connects the roasting chamber (126) of the roasting drum (122) and the exhaust port (115), and has an air passage configured to guide the heated air discharged from the roasting drum (122) to the exhaust port (115),
wherein the air sucked by the fan unit (120) is brought into contact with an outer peripheral wall of the wind tunnel structure (123) and reaches the gap air passage (125).

7. The hot air roasting machine (100) according to claim 6, wherein the wind tunnel structure (123) comprises a metal material.

8. The hot air roasting machine (100) according to any one of claims 1 to 7, wherein the heater unit (127) includes:
at least one heating wire (140a to 140c); and
at least one flow-regulating plate (141, 142) disposed inside the roasting drum (122) to regulate a flow of the air introduced from the air inlet.

9. The hot air roasting machine (100) according to claim 8,
wherein the at least one flow-regulating plate (141, 142) has a shape with a gap or a size to allow the air to pass, and
wherein the at least one heating wire (140a to 140c) is disposed near the gap.

10. The hot air roasting machine (100) according to claim 9, wherein the at least one heating wire (140a to 140c) and the gap are formed along an inner peripheral wall of the roasting drum (122).

11. The hot air roasting machine (100) according to claim 8,
wherein the at least one flow-regulating plate (141, 142) includes a first flow-regulating plate (141) and a second flow-regulating plate (142),
wherein the first flow-regulating plate (141) has a size to form a predetermined gap between an outer periphery of the first flow-regulating plate (141) and an inner peripheral wall of the roasting drum (122),
wherein the at least one heating wire (140a to 140c) is disposed near the predetermined gap, and
wherein the second flow-regulating plate (142) is disposed downstream of the first flow-regulating plate (141) and the at least one heating wire (140a to 140c) as viewed from the air inlet, and includes an opening at a center portion of the roasting drum (122) while in contact with the inner peripheral wall of the roasting drum (122).

12. The hot air roasting machine (100) according to claim 11, further comprising a partition plate (126a) having a plurality of slits (126b) that allow heated air to pass,
wherein the partition plate (126a) is disposed between the second flow-regulating plate (142) and the roasting chamber (126) inside the roasting drum (122), and
wherein each of the slits (126b) is disposed at a position separated from a center portion (126c) of the partition plate (126a) in a direction toward the inner peripheral wall.

13. The hot air roasting machine (100) according to any one of claims 8 to 12, wherein the at least one flow-regulating plate (141, 142) comprises mica.

14. The hot air roasting machine (100) according to any one of claims 8 to 13,
wherein the at least one heating wire (140a to 140c) comprises a plurality of heating wires, and
wherein the heating wires (140a to 140c) are arranged along an inner peripheral wall of the roasting drum (122).

15. The hot air roasting machine (100) according to claim 6 or 7, wherein the wind tunnel structure (123) is secured to the housing through (110) a heat insulating component.

16. The hot air roasting machine (100) according to claim 15, wherein the heat insulating component comprises resin.

17. The hot air roasting machine (100) according to claim 4 further comprising an electronic circuit board (113) disposed along an air passage between the fan unit (120) and an external surface of the wind tunnel structure (123).

18. The hot air roasting machine (100) according to claim 17, wherein the electronic circuit board (113) is secured to an inside bottom surface of the housing (110) near the fan unit (120).

19. The hot air roasting machine (100) according to claim 18, wherein the electronic circuit board (113) is secured by utilizing the roasting drum cover (121).

20. The hot air roasting machine (100) according to claim 1,
wherein the fan unit (120) includes a fan (120b) and a fan motor (120a), and is disposed near an inside bottom surface of the housing (110), and
wherein the fan unit (120) is configured to suck the air inside the housing (110) from a direction different from an axis of rotation of the fan (120b).

21. The hot air roasting machine (100) according to claim 20,
wherein the axis of rotation of the fan (120b) is perpendicular to an external bottom surface of the housing (110),
wherein the external bottom surface has a protruding cover (160) that protrudes in a direction parallel to the axis of rotation and in an outward direction from the housing (110), and w
herein the protruding cover (160) has an opening (160a) to suck the air into the housing (110) from a direction parallel to the external bottom surface.

22. The hot air roasting machine (100) according to claim 21, wherein the opening (160a) is a slit (160a).

23. The hot air roasting machine (100) according to claim 21, wherein the opening (160a) is a hole with mesh.

24. The hot air roasting machine (100) according to any one of claims 21 to 23, further comprising an electronic circuit board and a plate-like body (162) between the fan unit (120) and the roasting drum cover (121),
wherein the plate-like body (162) is disposed between the fan unit (120) and the electronic circuit board, and
wherein the plate-like body (162) is formed of a waterproof material, or has a waterproof coating.

## Patentansprüche

1. Heißluftröstmaschine (100), die Folgendes umfasst:
ein Gehäuse (110);
eine Lüftereinheit (120), die dafür konfiguriert ist, Luft in das Gehäuse (110) zu saugen;
eine Rösttrommel (122), die sich im Inneren befindet und einen Lufteinlass und eine Röstkammer (126) umfasst;
eine Heizeinheit (127), die zwischen dem Lufteinlass und der Röstkammer (126) in der Rösttrommel (122) angeordnet ist, und die dafür konfiguriert, die vom Lufteinlass eingebrachte Luft zu erwärmen; und
eine Rösttrommelabdeckung (121), die angeordnet ist, um einen Teil einer äußeren Umfangswand der Rösttrommel (122) abzudecken und mit einem Spalt von dem Teil einer äußeren Umfangswand der Rösttrommel (122) versehen ist,
wobei die Rösttrommel (122) ein Material umfasst, das eine Wärmeleitfähigkeit von einem vorbestimmten Wert oder mehr aufweist,
**dadurch gekennzeichnet, dass**
eine innere Umfangswand der Rösttrommelabdeckung (121) und der Teil der äußeren Umfangswand der Rösttrommel (122) einen Spaltluftkanal (125) bilden, der dafür konfiguriert ist, die von der Lüftereinheit (120) angesaugte Luft in den Lufteinlass der Rösttrommel (122) zu leiten.

2. Heißluftröstmaschine (100) nach Anspruch 1, wobei eine Außenfläche der Rösttrommel (122) ein Metallmaterial umfasst.

3. Heißluftröstmaschine (100) nach Anspruch 2, wobei das Metallmaterial Aluminium ist.

4. Heißluftröstmaschine (100) nach einem der Ansprüche 1 bis 3, wobei die Rösttrommelabdeckung (121) so angeordnet ist, dass sie mindestens einen Teil der äußeren Umfangswand der Rösttrommel (122) bedeckt, der einer Position entspricht, an der die Heizeinheit (127) angeordnet ist.

5. Heißluftröstmaschine (100) nach Anspruch 4, wobei die Rösttrommelabdeckung (121) so angeordnet ist, dass sie einen anderen Teil der äußeren Umfangswand der Rösttrommel (122) bedeckt, der einer Position entspricht, an der die Röstkammer (126) angeordnet ist.

6. Heißluftröstmaschine (100) nach einem der Ansprüche 1 bis 5, die ferner Folgendes umfasst:
eine Auslassöffnung (115), die dafür konfiguriert ist, erwärmte Luft, die die Rösttrommel (122) passiert hat, zu einer Außenseite des Gehäuses (110) abzulassen; und
eine Windkanalstruktur (123), die die Röstkammer (126) der Rösttrommel (122) und die Auslassöffnung (115) verbindet, und einen Luftkanal aufweist, der dafür konfiguriert ist, die erwärmte Luft, die von der Rösttrommel (122) abgegeben wird, zur Auslassöffnung (115) zu führen,
wobei die von der Lüftereinheit (120) angesaugte Luft mit einer äußeren Umfangswand der Windkanal struktur (123) in Kontakt gebracht wird und den Spaltluftkanal (125) erreicht.

7. Heißluftröstmaschine (100) nach Anspruch 6, wobei die Windkanalstruktur (123) ein Metallmaterial umfasst.

8. Heißluftröstmaschine (100) nach einem der Ansprüche 1 bis 7, wobei die Heizeinheit (127) Folgendes umfasst:
mindestens einen Heizdraht (140a bis 140c); und
mindestens eine Strömungsregelplatte (141, 142), die in der Rösttrommel (122) angeordnet ist, um einen Luftstrom zu regulieren, der vom Lufteinlass eingeführt wird.

9. Heißluftröstmaschine (100) nach Anspruch 8,
wobei die mindestens eine strömungsregulierende Platte (141, 142) eine Form mit einem Spalt oder einer Größe aufweist, um die Luft durchzulassen, und
wobei der mindestens eine Heizdraht (140a bis 140c) nahe dem Spalt angeordnet ist.

10. Heißluftröstmaschine (100) nach Anspruch 9, wobei der mindestens eine Heizdraht (140a bis 140c) und der Spalt entlang einer inneren Umfangswand der Rösttrommel (122) gebildet sind.

11. Heißluftröstmaschine (100) nach Anspruch 8,
wobei die mindestens eine strömungsregulierende Platte (141, 142) eine erste strömungsregulierende Platte (141) und eine zweite strömungsregulierende Platte (142) umfasst;
wobei die erste strömungsregulierende Platte (141) eine Größe aufweist, um einen vorbestimmten Spalt zwischen einem Außenumfang der ersten strömungsregulierenden Platte (141) und einer inneren Umfangswand der Rösttrommel (122) zu bilden,
wobei der mindestens eine Heizdraht (140a bis 140c) nahe dem vorbestimmten Spalt angeordnet ist und
wobei die zweite strömungsregulierende Platte (142) stromabwärts der ersten strömungsregulierenden Platte (141) und des mindestens einen Heizdrahtes (140a bis 140c) vom Lufteinlass aus gesehen angeordnet ist und eine Öffnung an einem Mittelabschnitt der Rösttrommel (122) umfasst, während sie mit der inneren Umfangswand der Rösttrommel (122) in Kontakt steht.

12. Heißluftröstmaschine (100) nach Anspruch 11, die ferner eine Trennplatte (126a) mit mehreren Schlitzen (126b) umfasst, die den Durchtritt von erwärmter Luft ermöglichen,
wobei die Trennplatte (126a) zwischen der zweiten strömungsregulierenden Platte (142) und der Röstkammer (126) innerhalb der Rösttrommel (122) angeordnet ist und
wobei jeder der Schlitze (126b) an einer Position angeordnet ist, die von einem Mittelabschnitt (126c) der Trennplatte (126a) in einer Richtung zur inneren Umfangswand getrennt ist.

13. Heißluftröstmaschine (100) nach einem der Ansprüche 8 bis 12, wobei die mindestens eine strömungsregulierende Platte (141, 142) Glimmer umfasst.

14. Heißluftröstmaschine (100) nach einem der Ansprüche 8 bis 13,
wobei der mindestens eine Heizdraht (140a bis 140c) mehrere Heizdrähte umfasst, und
wobei die Heizdrähte (140a bis 140c) entlang einer inneren Umfangswand der Rösttrommel (122) angeordnet sind.

15. Heißluftröstmaschine (100) nach Anspruch 6 oder 7, wobei die Windkanalstruktur (123) durch (110) eine wärmeisolierende Komponente am Gehäuse befestigt ist.

16. Heißluftröstmaschine (100) nach Anspruch 15, wobei die wärmeisolierende Komponente Harz umfasst.

17. Heißluftröstmaschine (100) nach Anspruch 4, die ferner eine elektronische Leiterplatte (113) umfasst, die entlang eines Luftkanals zwischen der Lüftereinheit (120) und einer Außenfläche der Windkanalstruktur (123) angeordnet ist.

18. Heißluftröstmaschine (100) nach Anspruch 17, wobei die elektronische Leiterplatte (113) an einer inneren Bodenfläche des Gehäuses (110) nahe der Lüftereinheit (120) befestigt ist.

19. Heißluftröstmaschine (100) nach Anspruch 18, wobei die elektronische Leiterplatte (113) unter Verwendung der Rösttrommelabdeckung (121) gesichert ist.

20. Heißluftröstmaschine (100) nach Anspruch 1,
wobei die Lüftereinheit (120) einen Lüfter (120b) und einen Lüftermotor (120a) umfasst und in der Nähe einer inneren Bodenfläche des Gehäuses (110) angeordnet ist, und
wobei die Lüftereinheit (120) dafür konfiguriert ist, die Luft innerhalb des Gehäuses (110) aus einer Richtung anzusaugen, die sich von einer Drehachse des Lüfters (120b) unterscheidet.

21. Heißluftröstmaschine (100) nach Anspruch 20,
wobei die Drehachse des Lüfters (120b) senkrecht zu einer äußeren Bodenfläche des Gehäuses (110) verläuft,
wobei die äußere Bodenfläche eine vorstehende Abdeckung (160) aufweist, die in einer Richtung parallel zur Drehachse und in einer nach außen gerichteten Richtung vom Gehäuse (110) vorsteht, und
wobei die vorstehende Abdeckung (160) eine Öffnung (160a) aufweist, um die Luft aus einer Richtung parallel zur äußeren Bodenfläche in das Gehäuse (110) zu saugen.

22. Heißluftröstmaschine (100) nach Anspruch 21, wobei die Öffnung (160a) ein Schlitz (160a) ist.

23. Heißluftröstmaschine (100) nach Anspruch 21, wobei die Öffnung (160a) ein Loch mit einem Netz ist.

24. Heißluftröstmaschine (100) nach einem der Ansprüche 21 bis 23, die ferner eine elektronische Leiterplatte und einen plattenartigen Körper (162) zwischen der Lüftereinheit (120) und der Rösttrommelabdeckung (121) umfasst,
wobei der plattenartige Körper (162) zwischen der Lüftereinheit (120) und der elektronischen Leiterplatte angeordnet ist und
wobei der plattenartige Körper (162) aus einem wasserdichten Material besteht oder eine wasserdichte Beschichtung aufweist.

## Revendications

1. Machine de torréfaction à air chaud (100), comprenant :
un boîtier (110) ;
une unité à ventilateur (120) configurée pour aspirer de l'air dans le boîtier (110) ;
un tambour de torréfaction (122) qui est creux à l'intérieur et inclut une entrée d'air et une chambre de torréfaction (126) ;
une unité chauffante (127) disposée entre l'entrée d'air et la chambre de torréfaction (126) dans le tambour de torréfaction (122), et configurée pour chauffer l'air introduit à partir de l'entrée d'air ; et
un couvercle de tambour de torréfaction (121) qui est disposé pour couvrir une partie d'une paroi périphérique extérieure du tambour de torréfaction (122) et pourvu d'un espace par rapport à la partie d'une paroi périphérique extérieure du tambour de torréfaction (122),
dans laquelle le tambour de torréfaction (122) comprend un matériau qui a une conductivité thermique d'une valeur prédéterminée ou plus,
**caractérisé en ce que**
une paroi périphérique intérieure du couvercle de tambour de torréfaction (121) et la partie de la paroi périphérique extérieure du tambour de torréfaction (122) forment un passage d'air à espace (125) configuré pour guider l'air qui a été aspiré par l'unité à ventilateur (120) dans l'entrée d'air du tambour de torréfaction (122).

2. Machine de torréfaction à air chaud (100) selon la revendication 1, dans laquelle une surface externe du tambour de torréfaction (122) comprend un matériau métallique.

3. Machine de torréfaction à air chaud (100) selon la revendication 2, dans laquelle le matériau métallique est de l'aluminium.

4. Machine de torréfaction à air chaud (100) selon l'une quelconque des revendications 1 à 3, dans laquelle le couvercle de tambour de torréfaction (121) est disposé pour couvrir au moins une partie de la paroi périphérique extérieure du tambour de torréfaction (122) correspondant à une position où l'unité chauffante (127) est disposée.

5. Machine de torréfaction à air chaud (100) selon la revendication 4, dans laquelle le couvercle de tambour de torréfaction (121) est disposé pour couvrir une autre partie de la paroi périphérique extérieure du tambour de torréfaction (122) correspondant à une position où la chambre de torréfaction (126) est disposée.

6. Machine de torréfaction à air chaud (100) selon l'une quelconque des revendications 1 à 5, comprenant en outre :
un orifice d'évacuation (115) configuré pour évacuer de l'air chauffé qui est passé dans le tambour de torréfaction (122) vers un extérieur du boîtier (110) ; et
une structure de tunnel à courant d'air (123) qui raccorde la chambre de torréfaction (126) du tambour de torréfaction (122) et l'orifice d'évacuation (115), et a un passage d'air configuré pour guider l'air chauffé évacué du tambour de torréfaction (122) vers l'orifice d'évacuation (115),
dans laquelle l'air aspiré par l'unité à ventilateur (120) est mis en contact avec une paroi périphérique extérieure de la structure de tunnel à courant d'air (123) et atteint le passage d'air à espace (125).

7. Machine de torréfaction à air chaud (100) selon la revendication 6, dans laquelle la structure de tunnel à courant d'air (123) comprend un matériau métallique.

8. Machine de torréfaction à air chaud (100) selon l'une quelconque des revendications 1 à 7, dans laquelle l'unité chauffante (127) inclut :
au moins un fil chauffant (140a à 140c) ; et
au moins une plaque régulatrice de débit (141, 142) disposée à l'intérieur du tambour de torréfaction (122) pour réguler un débit de l'air introduit à partir de l'entrée d'air.

9. Machine de torréfaction à air chaud (100) selon la revendication 8,
dans laquelle l'au moins une plaque régulatrice de débit (141, 142) a une forme avec un espace ou une taille pour permettre à l'air de passer, et
dans laquelle l'au moins un fil chauffant (140a à 140c) est disposé près de l'espace.

10. Machine de torréfaction à air chaud (100) selon la revendication 9, dans laquelle l'au moins un fil chauffant (140a à 140c) et l'espace sont formés le long d'une paroi périphérique intérieure du tambour de torréfaction (122).

11. Machine de torréfaction à air chaud (100) selon la revendication 8,
dans laquelle l'au moins un plaque régulatrice de débit (141, 142) inclut une première plaque régulatrice de débit (141) et une seconde plaque régulatrice de débit (142),
dans laquelle la première plaque régulatrice de débit (141) a une taille pour former un espace prédéterminé entre une périphérie extérieure de la première plaque régulatrice de débit (141) et une paroi périphérique intérieure du tambour de torréfaction (122),
dans laquelle l'au moins un fil chauffant (140a à 140c) est disposé près de l'espace prédéterminé, et
dans laquelle la seconde plaque régulatrice de débit (142) est disposée en aval de la première plaque régulatrice de débit (141) et de l'au moins un fil chauffant (140a à 140c) en vue depuis l'entrée d'air, et inclut une ouverture à une portion centrale du tambour de torréfaction (122) tout en étant en contact avec la paroi périphérique intérieure du tambour de torréfaction (122).

12. Machine de torréfaction à air chaud (100) selon la revendication 11, comprenant en outre une plaque de séparation (126a) ayant une pluralité de fentes (126b) qui permettent à de l'air chauffé de passer,
dans laquelle la plaque de séparation (126a) est disposée entre la seconde plaque régulatrice de débit (142) et la chambre de torréfaction (126) à l'intérieur du tambour de torréfaction (122), et
dans laquelle chacune des fentes (126b) est disposée à une position séparée d'une portion centrale (126c) de la plaque de séparation (126a) dans une direction vers la paroi périphérique intérieure.

13. Machine de torréfaction à air chaud (100) selon l'une quelconque des revendications 8 à 12, dans laquelle l'au moins une plaque régulatrice de débit (141, 142) comprend du mica.

14. Machine de torréfaction à air chaud (100) selon l'une quelconque des revendications 8 à 13,
dans laquelle l'au moins un fil chauffant (140a à 140c) comprend une pluralité de fils chauffants, et
dans laquelle les fils chauffants (140a à 140c) sont agencés le long d'une paroi périphérique intérieure du tambour de torréfaction (122).

15. Machine de torréfaction à air chaud (100) selon la revendication 6 ou 7, dans laquelle la structure de tunnel à courant d'air (123) est fixée au boîtier (110) par l'intermédiaire d'un composant isolant thermique.

16. Machine de torréfaction à air chaud (100) selon la revendication 15, dans laquelle le composant isolant thermique comprend une résine.

17. Machine de torréfaction à air chaud (100) selon la revendication 4, comprenant en outre une carte de circuit imprimé (113) disposée le long d'un passage d'air entre l'unité à ventilateur (120) et une surface externe de la structure de tunnel à courant d'air (123).

18. Machine de torréfaction à air chaud (100) selon la revendication 17, dans laquelle la carte de circuit imprimé (113) est fixée à une surface inférieure intérieure du boîtier (110) près de l'unité à ventilateur (120).

19. Machine de torréfaction à air chaud (100) selon la revendication 18, dans laquelle la carte de circuit imprimé (113) est fixée en utilisant le couvercle de tambour de torréfaction (121).

20. Machine de torréfaction à air chaud (100) selon la revendication 1,
dans laquelle l'unité à ventilateur (120) inclut un ventilateur (120b) et un moteur de ventilateur (120a), et est disposée près d'une surface inférieure intérieure du boîtier (110), et
dans laquelle l'unité à ventilateur (120) est configurée pour aspirer l'air à l'intérieur du boîtier (110) depuis une direction différente d'un axe de rotation du ventilateur (120b).

21. Machine de torréfaction à air chaud (100) selon la revendication 20,
dans laquelle l'axe de rotation du ventilateur (120b) est perpendiculaire à une surface inférieure externe du boîtier (110),
dans laquelle la surface inférieure externe a un couvercle saillant (160) qui fait saillie, dans une direction parallèle à l'axe de rotation et dans une direction vers l'extérieur, à partir du boîtier (110), et dans laquelle le couvercle saillant (160) a une ouverture (160a) pour aspirer l'air dans le boîtier (110) depuis une direction parallèle à la surface inférieure externe.

22. Machine de torréfaction à air chaud (100) selon la revendication 21, dans laquelle l'ouverture (160a) est une fente (160a).

23. Machine de torréfaction à air chaud (100) selon la revendication 21, dans laquelle l'ouverture (160a) est un trou avec une maille.

24. Machine de torréfaction à air chaud (100) selon l'une quelconque des revendications 21 à 23, comprenant en outre une carte de circuit imprimé et un corps de type plaque (162) entre l'unité à ventilateur (120) et le couvercle de tambour de torréfaction (121),
dans laquelle le corps de type plaque (162) est disposé entre l'unité à ventilateur (120) et la carte de circuit imprimé, et
dans laquelle le corps de type plaque (162) est formé d'un matériau étanche à l'eau, ou a un revêtement étanche à l'eau.
